# FASCICULE DE BREVET EUROPEEN

(11) **EP 3 645 365 B1**
(45) Date de publication et mention de la délivrance du brevet: **19.05.2021**
(21) Numéro de dépôt: 18749851.4
(22) Date de dépôt: 29.06.2018
(51) Int. Cl.: B61D 3/18, B61D 47/00

(54) **PROCEDE DE CHARGEMENT/DECHARGEMENT D'UNE SEMI-REMORQUE ROUTIERE SUR UN WAGON-POCHE ET WAGON-POCHE ADAPTE A CE PROCEDE**
VERFAHREN ZUM LADEN/ENTLADEN EINES SATTELAUFLIEGERS AUF EINEM TASCHENWAGEN UND DAFÜR GEEIGNETER TASCHENWAGEN
METHOD FOR LOADING/UNLOADING A ROAD SEMI-TRAILER ON A POCKET WAGON AND A POCKET WAGON SUITABLE FOR THIS METHOD

(30) Priorité: 30.06.2017 FR 1756216
(43) Date de publication de la demande: 06.05.2020
(73) Titulaire: Lohr Industrie, 67980 Hangenbieten (FR)
(72) Inventeur: ANDRE, Jean-Luc, 67120 Molsheim (FR); LANGE, Sébastien, 67000 Strasbourg (FR); OBER, Jacques, 67000 Strasbourg (FR); SCHVERER, Mathieu, 67117 Hurtigheim (FR)
(74) Mandataire: Merckling, Norbert
(86) Numéro de dépôt international: PCT/FR2018/051616
(87) Numéro de publication internationale: WO 2019/002796

(56) Documents cités:
- EP-A1- 1 292 478
- WO-A1-2011/110996
- FR-A1- 2 884 480

## Description

### Domaine technique

La présente invention appartient au domaine technique du transport ferroviaire des semi-remorques routières, des camions et/ou des conteneurs. Elle concerne plus particulièrement un procédé de chargement et de déchargement d'une semi-remorque routière sur un wagon ferroviaire de type wagon-poche afin de permettre son transport sur le wagon ferroviaire.

L'invention concerne également un ensemble déposable et un wagon poche adaptés pour mettre en œuvre ce procédé de chargement et destinés à recevoir principalement une semi-remorque, mais aussi éventuellement un camion ou un conteneur.

### Etat de la technique

Afin de limiter l'encombrement des routes et autoroutes, ainsi que la pollution générée par le transport routier, on souhaite développer le transport ferroviaire des semi-remorques.

Les semi-remorques sont ainsi chargées selon différentes techniques sur des wagons spécialisés dans des terminaux intermodaux routiers et ferroviaires, spécialement équipés pour réaliser de telles opérations. Elles sont ensuite transportées en train sur de longues distances et non plus sur le réseau routier.

De nombreux exemples de wagons spécifiques ont été décrits dans l'art antérieur. Les plus utilisés sont des wagons constitués d'une base roulante et d'une structure ferroviaire supérieure susceptible de se dissocier de sa base par pivotement. Selon les modèles, ce pivotement peut être central ou se faire au niveau de l'une de ses extrémités. Le wagon est ainsi capable de s'ouvrir afin de faciliter le chargement/déchargement des semi-remorques. En effet, par son pivotement, la structure ferroviaire supérieure est capable de se mettre en porte-à-faux jusqu'à reposer sur ou au-dessus du quai par l'une ou les deux de ses extrémités. Les semi-remorques peuvent ainsi être chargées et déchargées facilement, à l'aide d'une rampe adaptée, sur cette structure ferroviaire porteuse, qui, une fois le chargement/déchargement effectué, se replace en position de transport selon la direction longitudinale du wagon par un pivotement dans le sens opposé.

Un exemple de ce type de procédé de chargement au moyen de wagons à plateforme porteuse pivotante a par exemple été décrit dans le brevet européen EP 1.292.478.

Bien que performants en terme de hauteur de chargement, de tels systèmes sont très complexes et très coûteux. Ils nécessitent, en effet, la réalisation de wagons capables de s'ouvrir et de faire pivoter leur partie supérieure lorsqu'ils sont à l'arrêt pour procéder au chargement/déchargement, puis de se refermer et se réassembler avec une solidité suffisante pour garantir la reprise de tous les efforts pendant le transport et transporter les semi-remorques en toute sécurité.

En outre, avec ce type de wagons de l'art antérieur, les semi-remorques ne sont verrouillées pour le transport, qu'une fois placées en position de transport sur le wagon, après pivotement complet de la structure porteuse. Ce verrouillage se fait le plus souvent par l'intermédiaire du pivot d'attelage de la semi-remorque et à l'aide d'un dispositif de verrouillage porté par le wagon. Ceci implique, que, pendant les opérations de chargement ou de déchargement, la semi-remorque n'est pas maintenue lors du pivotement de la structure porteuse et se trouve simplement en appui sur ses béquilles. L'étape de pivotement de la structure porteuse est donc délicate à mettre en œuvre et relativement risquée. Ceci implique également que la semi-remorque doit être positionnée avec précision dans la structure porteuse pour que son pivot d'attelage se retrouve aligné ou proche du dispositif de verrouillage porté par le wagon.

Afin de remédier à ces inconvénients, un autre type de wagons de transport de semi-remorques a été proposé dans l'art antérieur. Il s'agit de wagons à coque ou nacelle déposable, tels que ceux décrits dans les brevets EP 0.619.211 et FR 2.884.480.

Ces wagons antérieurs comprennent une base roulante ferroviaire dont la partie centrale est creuse et forme un réceptacle adapté pour la réception et le maintien d'une nacelle amovible prévue pour supporter la semi-remorque à transporter. Pour procéder aux opérations de chargement/déchargement, cette nacelle est saisie et soulevée par un engin de manutention verticale, de type grue ou portique par exemple, et est extraite du wagon pour être déposée sur le quai. La semi-remorque est alors chargée sur la nacelle, puis l'ensemble est replacé sur la structure ferroviaire par l'engin de manutention verticale.

Les systèmes à nacelle de ce type sont des solutions techniquement beaucoup plus simples et beaucoup moins chères que les wagons à plateau tournant décrits précédemment. De plus, comme ils ne nécessitent aucun mécanisme complexe sur le wagon, ils sont plus légers.

Cependant, les dispositifs précités présentent encore des inconvénients.

Avec le dispositif décrit dans le brevet EP 0.619.211, aucun dispositif de maintien du pivot d'attelage de la semi-remorque n'est prévu sur la nacelle déposable. Lorsque l'engin de levage déplace la nacelle chargée pour la poser sur la structure ferroviaire, la semi-remorque n'est pas verrouillée, mais simplement en appui sur ses béquilles avec tous les problèmes de stabilité et de sécurité que cela implique.

En outre et comme précédemment, le verrouillage de la semi-remorque par son pivot d'attelage s'effectue sur le wagon et il est donc nécessaire que l'opérateur la positionne avec précision et réalise des opérations manuelles sur le wagon.

Dans le brevet FR 2 884 480, on a tenté de remédier à ces problèmes en ajoutant à la nacelle un dispositif de fixation du pivot d'attelage de la semi-remorque. Ce dispositif de fixation comprend un socle d'accrochage, duquel s'élève une colonne centrale de hauteur réglable, terminée en partie supérieure par une sellette d'accouplement du pivot d'attelage de la semi-remorque. Pour être mis en œuvre, ce dispositif de fixation doit être monté sur la nacelle par engagement de son socle dans des moyens de réception complémentaires situés à l'avant et au milieu de la paroi de fond de la nacelle.

Un deuxième mode de réalisation, plus pratique a également été décrit dans ce document antérieur. Dans celui-ci, le socle d'accrochage est remplacé par une traverse qui vient se fixer sur une crémaillère située sur les bords de la nacelle. Cette traverse comporte une sellette d'accouplement et plusieurs rangées de perforations à ses extrémités dans lesquelles l'opérateur doit insérer un ensemble de piges pour fixer la traverse aux crémaillères de la nacelle.

Dans les deux cas, pour charger une semi-remorque avec ces dispositifs, on commence par déposer la nacelle sur le quai et on fait rouler la semi-remorque sur celle-ci. Une fois correctement positionnée, la semi-remorque est placée sur ses béquilles et abandonnée par son tracteur. L'opérateur doit alors mettre en place le dispositif amovible de fixation du pivot d'attelage, afin de verrouiller la semi-remorque à la nacelle.

Pour cela, l'opérateur doit simultanément engager la sellette d'accouplement sur le pivot d'attelage de la semi-remorque, et fixer le dispositif de fixation sur la nacelle. Cette opération est assez fastidieuse pour l'opérateur, car elle est délicate à réaliser. En effet, elle suppose que la hauteur de la colonne du dispositif de fixation de la première variante soit parfaitement réglée ou que les piges de la seconde variante aient été placées dans les bonnes perforations, et de plus que la semi-remorque ait été placée précisément sur la nacelle pour que son pivot d'attelage se situe à la bonne position. En effet, si le tracteur a laissé la semi-remorque un peu trop en avant ou en arrière, ou si les réglages de hauteur de la colonne ou des piges ont été mal faits, il est impossible de verrouiller simultanément la sellette d'accouplement au pivot d'attelage et le dispositif de fixation à la nacelle. Il est alors nécessaire de recommencer les réglages et/ou de réatteler le tracteur à la semi-remorque pour la déplacer à nouveau jusqu'à sa position précise de chargement. Une fois le tracteur reparti, une nouvelle tentative de mise en place du dispositif de fixation doit alors avoir lieu.

Toutes ces difficultés expliquent que cette opération de mise en place du dispositif de fixation amovible, qui est délicate et fastidieuse et qui se fait, en outre, sous la semi-remorque sans aucune visibilité pour l'opérateur, a considérablement freiné le développement de ce système antérieur de chargement de semi-remorques.

Le procédé et le système de chargement/déchargement de semi-remorques selon l'invention ont pour but de remédier à ces différents inconvénients de l'art antérieur.

### Exposé de l'invention

Pour cela, l'invention enseigne un nouveau procédé de chargement d'une semi-remorque routière sur un wagon-poche comprenant une structure ferroviaire à réceptacle et un ensemble déposable de chargement/déchargement d'une semi-remorque routière comportant :
- une coque déposable, destinée à être engagée de manière amovible dans le réceptacle de la structure ferroviaire, qui comprend une paroi de fond, deux parois latérales et deux brancards longitudinaux situés en partie supérieure au-dessus des parois latérales, l'ensemble formant une poche de chargement pour la semi-remorque ; et qui comprend également des premiers éléments d'immobilisation et des interfaces mécaniques aptes à coopérer avec des moyens de préhension d'un engin de manutention ; et
- un dispositif de verrouillage, qui comprend des seconds éléments d'immobilisation coopérant avec les premiers éléments d'immobilisation pour assurer la fixation amovible du dispositif de verrouillage sur la coque déposable ; et une sellette d'accouplement du pivot d'attelage de la semi-remorque afin d'arrimer la semi-remorque à la coque déposable.

Selon l'invention, le procédé comprend les étapes suivantes :
- saisir la coque déposable en engageant les moyens de préhension d'un engin de manutention dans les interfaces mécaniques de la coque déposable, et, à l'aide de l'engin de manutention, soulever la coque déposable et la déposer hors du réceptacle de la structure ferroviaire ;
- équiper le dispositif de verrouillage sur la semi-remorque préalablement abandonnée par son tracteur routier, en engageant le pivot d'attelage de la semi-remorque dans la sellette d'accouplement du dispositif de verrouillage ;
- charger la semi-remorque équipée du dispositif de verrouillage sur la coque déposable au moyen d'un tracteur de manutention, en la faisant rouler en marche avant ou en marche arrière sur la paroi de fond de la coque déposable, entre les parois latérales et les brancards longitudinaux ;
- à l'aide du tracteur de manutention, positionner le dispositif de verrouillage sur la coque déposable, dans une position permettant aux seconds éléments d'immobilisation de coopérer avec les premiers éléments d'immobilisation ;
- libérer le tracteur de manutention et l'éloigner de l'ensemble déposable ;
- saisir l'ensemble déposable chargé en engageant les moyens de préhension de l'engin de manutention dans les interfaces mécaniques de la coque déposable et soulever l'ensemble déposable chargé ;
- à l'aide de l'engin de manutention, placer l'ensemble déposable chargé sur la structure ferroviaire, en engageant la coque déposable dans le réceptacle (7) de la structure ferroviaire.

Selon les cas, la coque déposable peut se trouver dans une zone de stockage ou être engagée dans le réceptacle de la structure ferroviaire, avant d'être saisie et soulevée à l'aide de l'engin de manutention.

Lorsque la structure ferroviaire se trouve sur une voie ferrée à proximité d'un quai, l'engin de manutention peut, selon les variantes, déposer la coque déposable à côté de la structure ferroviaire sur le quai, ou par-dessus la structure ferroviaire en travers par rapport à la voie ferrée, pendant l'étape consistant à déposer la coque déposable hors du réceptacle de la structure ferroviaire.

La deuxième de ces variantes, réalisable dans le cas d'une voie en fosse, permet avantageusement d'optimiser les flux des engins de manutention et des semi-remorques sur le terminal. La coque est alors déposée de préférence en diagonale par-dessus le wagon, approximativement au centre de celui-ci et en appui sur les quais latéraux de l'infrastructure.

Selon un mode de réalisation préférentiel de cette variante, on maintient la coque déposable en position longitudinale au moyen d'éléments d'appui présents en sous-face de sa paroi de fond qui se retrouvent en butée contre les bords du quai ou de la structure ferroviaire.

Selon un mode de réalisation du procédé selon l'invention, lorsque la coque déposable est soulevée et déposée hors du réceptacle de la structure ferroviaire à l'aide de l'engin de manutention, une première semi-remorque peut se trouver sur la coque déposable. Cette première semi-remorque est alors déchargée hors de la coque déposable avant qu'une deuxième semi-remorque soit chargée sur la coque déposable, lors de l'étape consistant à charger la semi-remorque équipée du dispositif de verrouillage sur la coque déposable au moyen d'un tracteur de manutention, en la faisant rouler en marche avant ou en marche arrière sur la paroi de fond de la coque déposable, entre les parois latérales et les brancards longitudinaux.

Dans ce cas, cette première semi-remorque initialement présente sur la coque déposable est déchargée au moyen d'un tracteur de manutention qui recule pour verrouiller le dispositif de verrouillage sur le tracteur de manutention, puis qui fait rouler la première semi-remorque en marche avant ou en marche arrière sur la paroi de fond de la coque déposable, entre les parois latérales et les brancards longitudinaux.

Selon un mode de réalisation préférentiel du procédé selon l'invention, lorsque la semi-remorque équipée du dispositif de verrouillage est chargée sur la coque déposable au moyen d'un tracteur de manutention, le tracteur de manutention rapproche le dispositif de verrouillage des brancards longitudinaux et se déplace progressivement jusqu'à ce que le dispositif de verrouillage arrive en butée contre des butées de positionnement d'un dispositif de positionnement qui se trouve sur la coque déposable, ce qui indique que le dispositif de verrouillage est correctement positionné longitudinalement pour que les seconds éléments d'immobilisation puissent coopérer avec les premiers éléments d'immobilisation, avant que lesdits premiers éléments d'immobilisation soient en prise avec lesdits seconds éléments d'immobilisation.

Selon ce mode de réalisation, après avoir positionné longitudinalement le dispositif de verrouillage, l'opérateur peut régler sa hauteur en dégonflant les suspensions du tracteur de manutention.

Selon une variante de ce mode de réalisation, on peut bloquer longitudinalement le dispositif de verrouillage d'un côté par ces butées de positionnement et de l'autre par des butées de coincement du dispositif de positionnement.

L'invention se rapporte également à un ensemble déposable de chargement/déchargement d'une semi-remorque routière sur une structure ferroviaire à réceptacle d'un wagon de type wagon-poche, qui permet de mettre en œuvre le procédé de chargement selon l'invention.

Cet ensemble déposable comporte :
- une coque déposable, destinée à être engagée de manière amovible dans le réceptacle de la structure ferroviaire, qui comprend une paroi de fond sur laquelle la semi-remorque est chargée, et des interfaces mécaniques aptes à coopérer avec des moyens de préhension d'un engin de manutention afin de réaliser le levage et la dépose de la coque déposable ; et
- un dispositif de verrouillage, qui comprend une sellette d'accouplement du pivot d'attelage de la semi-remorque, et qui se fixe de manière amovible sur la coque déposable, d'un côté de celle-ci défini comme étant le côté avant, afin d'arrimer la semi-remorque à la coque déposable.

La coque déposable comprend en outre :
- deux brancards longitudinaux, situés en partie supérieure de la coque déposable et comportant chacun une portion d'extrémité avant qui s'étend en porte-à-faux vers l'avant au-delà de la paroi de fond,
- des premiers éléments d'immobilisation situés sur la portion d'extrémité avant des brancards longitudinaux, et
- deux parois latérales, qui bordent latéralement la paroi de fond et s'étendent vers le haut jusqu'aux brancards longitudinaux, ces parois latérales formant avec la paroi de fond une poche de chargement pour la semi-remorque.

En outre, le dispositif de verrouillage comprend :
- une base sur laquelle est assemblée la sellette d'accouplement, cette base étant une traverse qui se fixe de manière amovible par ses extrémités sur la portion d'extrémité avant des brancards longitudinaux, et
- des seconds éléments d'immobilisation qui coopèrent avec les premiers éléments d'immobilisation pour assurer la retenue du dispositif de verrouillage sur la coque déposable.

Ainsi, lorsque le dispositif de verrouillage est fixé sur la coque déposable, l'espace situé sous la portion d'extrémité avant des brancards longitudinaux reste libre.

Selon l'invention, la coque déposable comporte en outre un dispositif de positionnement, comprenant deux butées de positionnement, situées une sur chaque portion d'extrémité avant des brancards longitudinaux, qui, lorsque le dispositif de verrouillage est en butée contre ces butées de positionnement sans que lesdits premiers éléments d'immobilisation soient en prise avec lesdits seconds éléments d'immobilisation, garantissent un positionnement longitudinal adapté du dispositif de verrouillage par rapport à la coque déposable pour que les premiers éléments d'immobilisation et les seconds éléments d'immobilisation puissent coopérer.

Selon un mode de réalisation, le dispositif de positionnement comprend en outre deux butées de coincement, situées une sur chaque portion d'extrémité avant des brancards longitudinaux, qui permettent de bloquer longitudinalement le dispositif de verrouillage entre les butées de positionnement et les butées de coincement du dispositif de positionnement.

Selon une variante préférentielle, les butées de positionnement et/ou les butées de coincement sont des butées mobiles ou effaçables ou escamotables ou basculantes.

Grâce au dispositif de positionnement selon l'invention, l'opérateur qui pilote le tracteur de manutention peut très facilement contrôler, seul, la mise en place du dispositif de verrouillage sur la coque déposable et s'assurer d'un positionnement optimal de celui-ci, correspondant précisément à l'engagement des éléments d'immobilisation complémentaires, sans avoir à descendre du tracteur de manutention pour contrôler visuellement ce positionnement, ni à manœuvrer plusieurs fois pour obtenir ce positionnement précis.

Les opérations longues et fastidieuses de mise en place imposées par les procédés et dispositifs de l'art antérieur sont ainsi avantageusement évitées.

Selon un mode de réalisation, les interfaces mécaniques sont situées sur les brancards longitudinaux et sont des ouvertures ou cavités adaptées à la préhension par des pinces d'un engin de manutention à pinces, ou sont des coins ISO.

Selon un mode de réalisation, la coque déposable comporte en outre un ensemble d'éléments d'appui situés en sous-face de la paroi de fond.

Selon un mode de réalisation, ces éléments d'appui peuvent être pivotants, repliables ou escamotables.

Selon un mode de réalisation, ces éléments d'appui sont disposés selon deux rangées obliques.

Selon un mode de réalisation, la coque déposable comporte en outre un dispositif de centrage qui facilite l'engagement de la coque déposable dans le réceptacle de la structure ferroviaire.

De préférence, ce dispositif de centrage peut être un ensemble de deux chanfreins longitudinaux qui relient les parois latérales à la paroi de fond de la coque déposable.

Selon un mode de réalisation, les premiers éléments d'immobilisation et les seconds éléments d'immobilisation sont indifféremment pour les uns des plots de verrouillage saillants, fixes ou escamotables, et pour les autres des ouvertures dans lesquelles les plots de verrouillage s'engagent afin d'assurer la retenue du dispositif de verrouillage sur la coque déposable.

Selon un mode préférentiel de réalisation, le dispositif de verrouillage comporte un système d'inclinaison ou de réglage de la hauteur de la sellette d'accouplement par rapport à la base.

Selon un mode de réalisation, le dispositif de verrouillage comprend des interfaces mécaniques aptes à coopérer avec des moyens de préhension d'un engin de manutention.

L'invention enseigne enfin un wagon-poche qui comprend une structure ferroviaire à réceptacle et un ensemble déposable de chargement/déchargement d'une semi-remorque routière, et dont l'ensemble déposable, supporté par la structure ferroviaire, est conforme à l'invention et comprend une coque déposable engagée de manière amovible dans le réceptacle de la structure ferroviaire.

Selon un mode de réalisation, la structure ferroviaire comporte en outre des butées de positionnement de la coque déposable.

Selon un mode de réalisation, la structure ferroviaire comporte en outre des zones d'appui localisées, de hauteur réglable, sur lesquelles vient reposer l'ensemble déposable lorsque la coque déposable est engagée dans le réceptacle.

Selon un mode de réalisation préférentiel de ce wagon-poche qui comporte au moins deux bogies, lorsque la coque déposable est engagée dans le réceptacle de la structure ferroviaire, l'espace libre de l'ensemble déposable, situé sous la portion d'extrémité avant des brancards longitudinaux, est occupé par l'un desdits bogies.

Selon un mode de réalisation préférentiel, le wagon-poche est un wagon double qui comporte :
- trois bogies, consistant en deux bogies d'extrémité et un bogie intermédiaire, pouvant être ou non de même nature ;
- deux structures ferroviaires à réceptacle, chacune de ces structures ferroviaires étant supportée par l'un des bogies d'extrémité et par le bogie intermédiaire, les deux structures ferroviaire étant de préférence liées par une liaison articulée au droit du bogie intermédiaire ; et
- deux ensembles déposables, supportés chacun par l'une des structures ferroviaires et dont la coque déposable est engagée de manière amovible dans le réceptacle de la structure ferroviaire correspondante.

En outre, l'espace libre situé sous la portion d'extrémité avant des brancards longitudinaux de chacun de ces ensembles déposables est avantageusement occupé par l'un des bogies d'extrémité.

Selon un autre mode de réalisation, le wagon-poche peut également être un wagon de type rame qui comporte plusieurs structures ferroviaires à réceptacle assemblées les unes à la suite des autres de manière indissociable, et plusieurs ensembles déposables chacun étant engagé de manière amovible dans le réceptacle de l'une des structures ferroviaires.

Avantageusement, la coque déposable peut aussi permettre le chargement de tracteurs, de porteurs ou de camionnettes. Dans ces cas, le verrouillage du chargement par rapport à la coque déposable est préférentiellement réalisé via un calage des essieux.

Avantageusement, le wagon peut aussi transporter des conteneurs, des caisses mobiles ou autres. Il comporte alors des interfaces adaptées de retenue, préférentiellement escamotables et liées soit à la coque, soit directement aux structures ferroviaires.

L'invention fournit ainsi avantageusement un procédé de chargement simple et pratique pour le transport ferroviaire des semi-remorques, ainsi qu'un ensemble déposable de chargement/déchargement et un wagon-poche prévus pour mettre en œuvre ce procédé qui constituent une alternative plus économique aux wagons classiques à plate-forme tournante motorisée.

Ce procédé permet le chargement et le déchargement des semi-remorques en toute sécurité, car celles-ci sont déjà arrimées par leur pivot d'attelage dès leur mise en place sur la coque déposable, avant d'être chargées sur la structure ferroviaire.

En outre, cet arrimage est réalisé d'une façon simple et pratique pour l'opérateur et sans qu'il n'ait à intervenir sur la structure ferroviaire.

Enfin, par sa structure originale, l'ensemble déposable permet un gain de place important dans le wagon du fait de l'encastrement d'un bogie sous la partie en porte-à-faux des brancards. Les wagons peuvent ainsi être réalisés plus courts et plus compacts.

Il est également possible de prévoir des wagons doubles capables de transporter simultanément deux semi-remorques et qui sont avantageusement équipés de trois bogies au lieu de quatre. La répartition des charges s'en trouve optimisée, un report de charge important sur les bogies d'extrémité permettant de ne pas surcharger le boggie intermédiaire.

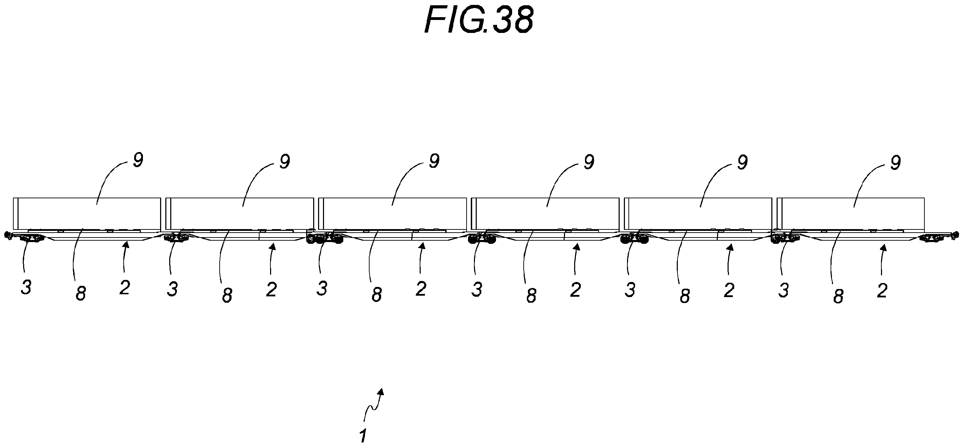

Selon un autre mode de réalisation utilisable sur les réseaux ferroviaires acceptant des charges à l'essieu importantes, les wagons peuvent former un ensemble indissociable de type rame sans attelage. Cette configuration, dont un exemple a été représenté sur la figure 38, permet ainsi d'optimiser le nombre de bogie à un par semi-remorque transportée.

Tous ces avantages font du procédé selon l'invention une solution particulièrement inventive aux problèmes posés par les procédés de l'art antérieur.

### Brève description des figures

D'autres caractéristiques et avantages de l'invention apparaîtront à la lecture de la description détaillée qui va suivre, description faite en référence aux dessins annexés, dans lesquels :
- la figure 1 est une vue générale d'ensemble en perspective d'un exemple de wagon-poche double selon l'invention chargé de deux semi-remorques ;
- la figure 2 est une vue générale en perspective du wagon-poche double de la figure 1 à l'état déchargé ;
- la figure 3 est une vue en perspective d'un exemple de structure ferroviaire à réceptacle adapté pour la réception d'un ensemble déposable selon l'invention ;
- la figure 4 est une vue en perspective d'un exemple d'ensemble déposable selon l'invention présenté hors de la structure ferroviaire ;
- la figure 5 est une vue en perspective du dispositif de verrouillage de l'ensemble déposable de la figure 4, représenté seul ;
- la figure 6 est une vue en perspective de la coque déposable de l'ensemble déposable de la figure 4, représentée seule ;
- les figures 7 et 8 sont des vues de dessous en perspective, respectivement d'une première et d'une deuxième variante, de la coque déposable de la figure 6;
- les figures 9 à 13 correspondent à une séquence de vues schématiques illustrant la mise en place et le retrait du dispositif de verrouillage sur une coque déposable équipée d'une première variante de dispositif de positionnement ;
- les figures 14 à 19 correspondent à une séquence de vues schématiques illustrant la mise en place du dispositif de verrouillage sur une coque déposable équipée d'une deuxième variante de dispositif de positionnement, ainsi que la mise en place de l'ensemble sur la structure ferroviaire ;
- les figures 20 à 26 correspondent à une séquence de vues schématiques illustrant la mise en place du dispositif de verrouillage sur une coque déposable équipée d'une troisième variante de dispositif de positionnement, ainsi que la mise en place de l'ensemble sur la structure ferroviaire ;
- les figures 27 à 31 correspondent à une séquence de vues schématiques en perspectives illustrant un premier exemple de procédé de chargement selon l'invention ;
- les figures 32 à 35 correspondent à une séquence de vues schématiques en perspectives illustrant un deuxième exemple de procédé de déchargement selon l'invention ; et
- les figures 36 et 37 sont des vues de côté en perspective qui illustrent deux variantes de butée de positionnement de la coque déposable, en contact de butée avec respectivement les bords du quai sur la figure 36 et la structure ferroviaire sur la figure 37 ;
- la figure 38 est une vue générale de profil d'un exemple de wagon-poche selon l'invention de type rame, chargé de six semi-remorques.

### Exposé détaillé de l'invention

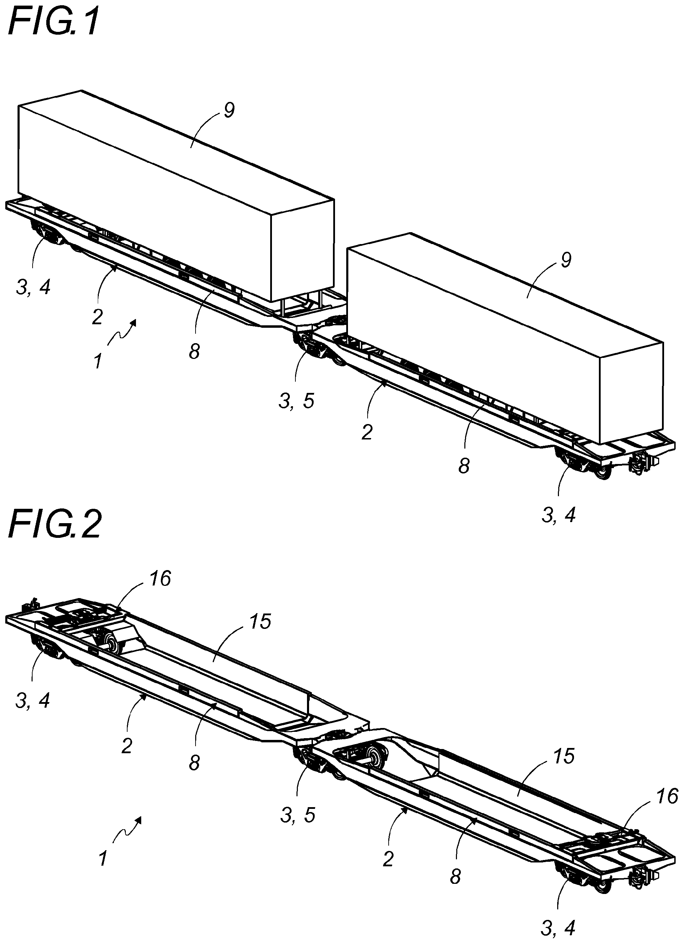

Le procédé de chargement et l'ensemble déposable selon la présente invention vont maintenant être décrits de façon détaillée en référence aux figures 1 à 38. Les éléments équivalents représentés sur les différentes figures porteront les mêmes références numériques.

On définira dans la suite de cette description les notions de haut et de bas, d'inférieur et de supérieur, etc..., en fonction de l'orientation adoptée par les éléments représentés sur les différentes figures.

De la même façon, on définira le côté avant de l'ensemble déposable comme étant celui où se trouve le dispositif de verrouillage, ce qui correspond également au côté où se trouve l'avant de la semi-remorque une fois celle-ci chargée sur l'ensemble déposable selon l'invention.

Sur les figures 1 et 2, on a représenté un exemple de wagon-poche 1 selon l'invention. Sur cet exemple, ce wagon-poche 1 comprend deux structures ferroviaires 2 et trois bogies 3, dont deux bogies d'extrémités 4 et un bogie intermédiaire 5.

Chacune des structures ferroviaires 2 est ainsi supportée par un bogie d'extrémité 4 et une partie du bogie intermédiaire 5 Elles sont articulées entre elles au droit du bogie intermédiaire 5, la liaison pouvant avantageusement être réalisée suivant le type UIC (rotule reprenant l'ensemble des efforts) ou suivant un autre type quelconque de liaison connu de l'homme du métier et reconnu dans le domaine ferroviaire..

Chacune de ces structures ferroviaires 2 comporte une zone centrale creuse 6 qui forme un réceptacle 7 de forme et de dimensions adaptées à la réception d'un ensemble déposable 8 selon l'invention. Ces deux structures ferroviaires 2 sont sensiblement identiques, sauf éventuelles spécificités de la liaison, mais disposées en sens inverse l'une de l'autre.

Un tel wagon est particulièrement avantageux car il permet de transporter simultanément deux semi-remorques 9 comme représenté sur la figure 1, chacune de ces semi-remorques étant chargée sur un ensemble déposable 8 et supportée par une structure ferroviaire 2.

Bien entendu, et même si cela n'a pas été représenté, il est également possible de réaliser un wagon-poche 1 simple, plus classique, ne comprenant qu'une seule structure ferroviaire supportée par deux bogies d'extrémité. Dans ce cas, pour transporter deux semi-remorques, il est nécessaire d'utiliser deux wagons-poches attelés l'un à l'autre et donc quatre bogies. Le wagon-poche 1 double représenté sur les figures permet avantageusement de réaliser un ensemble ferroviaire plus court et plus compact en limitant le nombre de bogies nécessaires.

A l'inverse, on peut également réaliser un wagon poche 1 de type rame, par exemple tel que celui représenté sur la figure 38, dans lequel plusieurs structures ferroviaires 2 sont assemblées les unes à la suite des autres, de manière indissociable et sans attelage, chacune étant supportée par un unique bogie 3, à l'exception de la dernière qui repose sur deux bogies 2.

Chacune des structures ferroviaires 2 de la rame comprend un réceptacle 7 pouvant recevoir un ensemble déposable 8 et peut donc transporter une semi-remorque 9. Cette configuration permet ainsi avantageusement de limiter le nombre de bogie 3 à un par semi-remorque 9 transportée.

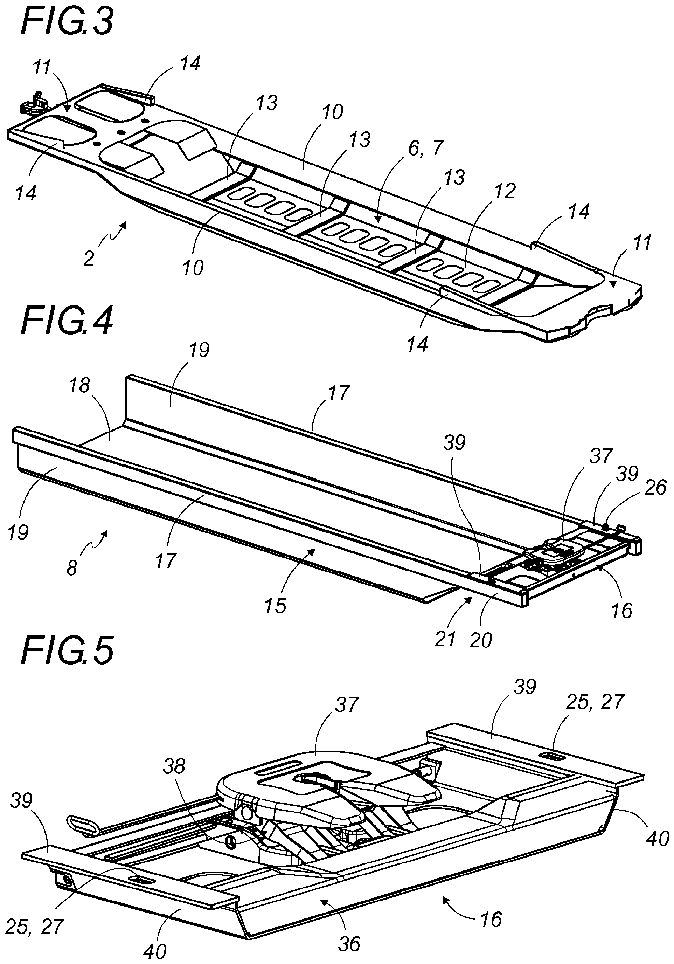

Une structure ferroviaire 2 a été représentée seule et à titre d'exemple sur la figure 3. Cette structure ferroviaire 2 peut avantageusement être très simple. Elle comporte ainsi deux longerons supérieurs 10 qui participent à la tenue structurelle du wagon et qui permettent de supporter le poids de l'ensemble déposable 8 prévu pour être placé en appui sur ceux-ci. Ces longerons supérieurs 10 sont réunis par deux parties d'extrémités 11, destinées à venir reposer sur les bogies 3 correspondants. Ces parties d'extrémités 11 comportent les interfaces d'articulation et d'attelage nécessaires à la constitution et au fonctionnement du wagon-poche, ainsi qu'à son attelage avec les wagons adjacents.

Entre ces longerons supérieurs 10 et ces parties d'extrémités 11, se trouve la zone centrale creuse 6 qui s'étend vers le bas, entre les bogies 3, et qui constitue le réceptacle 7. Ce réceptacle 7 est délimité en partie inférieure par une paroi de fond 12, préférentiellement ajourée pour gagner du poids, ou plus simplement par un ensemble de traverses telles que 13 qui relient les deux longerons supérieurs 10 et confèrent de la rigidité à la structure ferroviaire 2. Cette paroi de fond 12 et/ou ces traverses 13 permettent également de reprendre, si nécessaire, une partie du poids de l'ensemble déposable 8 selon l'invention lorsqu'il est engagé dans le réceptacle 7.

Ce réceptacle 7 peut également être réalisé sans fond ou avec des traverses 13 situées en dehors de la zone de réception de l'ensemble déposable 8. Dans ce cas, la paroi de fond 12 est supprimée et les traverses 13 sont réparties de façon à permettre à l'ensemble déposable 8 de descendre le plus bas possible, ce dernier reposant alors uniquement par ses brancards longitudinaux sur les longerons supérieurs 10.

Avantageusement, les longerons supérieurs 10 peuvent comporter des zones d'appui localisées, préférentiellement réalisées sous la forme de cales de hauteur réglable, l'ensemble déposable 8 reposant alors uniquement sur ces zones d'appui localisées et non plus sur l'ensemble des longerons supérieurs 10.

La hauteur de ces zones d'appui localisées peut être prévue ajustable, à la construction ou de préférence en utilisation, en fonction des charges transportées de manière à compenser l'écrasement des ressorts de suspension des boggies. Il est ainsi possible d'aligner la paroi de fond 18 de la coque 15 avec le gabarit ferroviaire bas, voire de l'ajuster quel que soit le poids et la répartition de la charge, la garde au sol étant maintenue constante, et donc également la hauteur de chargement entre gabarit bas et haut, pour tous les états de charge. Dans ce cas, la structure ferroviaire 2 est préférentiellement réalisée ouverte en partie basse pour ne pas engager le gabarit.

De telles zones d'appui localisées permettent également de s'affranchir de la présence éventuelle de débris, de glace, d'amas de neige ou autre qui pourrait gêner le bon positionnement de l'ensemble déposable 8 sur la structure ferroviaire 2.

La structure ferroviaire 2 comporte également de préférence des butées de positionnement 14, par exemple de forme sensiblement triangulaire comme représenté, situées dans la zone d'extrémité des longerons supérieurs 10 au niveau de chacune des parties d'extrémités 11. Ces butées de positionnement 14 servent avantageusement à bloquer en position l'ensemble déposable 8 lorsqu'il est engagé dans le réceptacle 7 comme on l'expliquera par la suite.

Afin d'être polyvalente, cette structure ferroviaire 2 peut en outre comporter des interfaces de verrouillage pour un autre type de chargement, tel que par exemple un conteneur ou une caisse mobile, pouvant être transporté à la place d'une semi-remorque. Ces interfaces, non représentées sur les figures, peuvent être par exemple des pions rabattables compatibles avec des coins ISO.

Comme représenté sur la figure 4, l'ensemble déposable 8 selon l'invention comprend une coque déposable 15 et un dispositif de verrouillage 16.

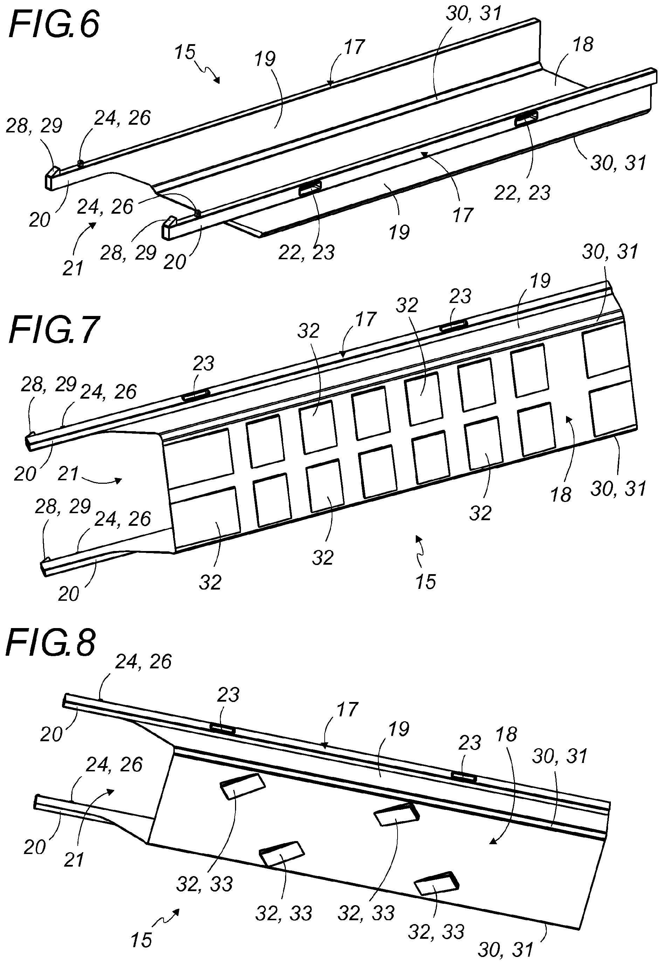

La coque déposable 15, représentée seule sur les figures 7 et 8, comprend deux brancards longitudinaux 17, une paroi de fond 18 et deux parois latérales 19 réunissant la paroi de fond 18 aux brancards longitudinaux 17. La paroi de fond 18 et les parois latérales 19 constituent ainsi une poche de chargement, suspendue aux brancards longitudinaux 17, appropriée pour la réception d'une semi-remorque 9.

Ainsi, la paroi de fond 18 est adaptée à la reprise des essieux de la semi-remorque 9 et est compatible avec le roulage des roues de la semi-remorque, qui, comme on le verra par la suite, roule sur cette paroi de fond 18 lors de son chargement et/ou de son déchargement. De même, lors de ces opérations, la semi-remorque 9 et son tracteur de manutention doivent pouvoir la traverser. La coque déposable 15 ne présente donc aucun élément s'opposant à cette traversée.

Bien que non représenté, la paroi de fond 18 peut comprendre en outre des éléments de réception des roues de la semi-remorque 9, notamment des zones en creux, ou des éléments de calage.

Les parois latérales 19 peuvent être quelconques, réalisées pleines ou ajourées, par exemple sous la forme d'un treillis, d'un cadre, de bandes ou autre.

Selon l'invention, les deux brancards longitudinaux 17, situés en partie supérieure de la coque déposable 15, comprennent une portion d'extrémité avant 20 qui s'étend en porte-à-faux vers l'avant, au-delà de la paroi de fond 18. Un espace libre 21 est ainsi défini sous cette portion d'extrémité avant 20 des brancards longitudinaux 17 et à l'avant de la paroi de fond 18.

La coque déposable 15 comprend également des interfaces mécaniques 22, qui lui permettent d'être agrippée par les moyens de préhension d'un engin de manutention, afin d'être soulevée et déplacée par celui-ci. Ces interfaces mécaniques 22 sont de préférence situées sur les brancards longitudinaux 17 qui constituent généralement la partie la plus rigide de la coque déposable 15. Sur l'exemple représenté, ces interfaces mécaniques 22 sont par exemple un ensemble de quatre ouvertures 23 sensiblement rectangulaires ménagées dans les brancards longitudinaux 17, qui sont adaptés pour coopérer avec les pinces d'un engin de manutention à pinces, par exemple de type grue ou portique ou encore de type « reach stacker ». Ces ouvertures 23 peuvent également être remplacées ou complétées par des coins ISO situés en extrémité des brancards longitudinaux 17.

La portion d'extrémité avant 20 des brancards longitudinaux 17 est destinée à recevoir le dispositif de verrouillage 16 qui vient se fixer par-dessus celle-ci. Elle comporte pour cela des premiers éléments d'immobilisation 24 prévus pour coopérer avec des seconds éléments d'immobilisation 25 portés par le dispositif de verrouillage 16, afin d'assurer la retenue du dispositif de verrouillage 16 sur la coque déposable 15. Sur le mode de réalisation représenté sur les figures 6 à 8, et 9 à 13, ces premiers éléments d'immobilisation 24 sont de simples plots de verrouillage saillant 26, fixes, qui coopèrent avec des ouvertures 27 correspondantes ménagées dans le dispositif de verrouillage 16. De par leur forme adaptée, l'engagement des plots de verrouillage saillant 26 dans les ouvertures 27 assure le blocage longitudinal et latéral du dispositif de verrouillage 16 par rapport à la coque déposable 15, ainsi que sa retenue verticale vers le haut selon la pratique connue dans le domaine des wagons porte-conteneur. De manière évidente, ces deux types d'éléments d'immobilisation peuvent être inversés, le dispositif de verrouillage 16 portant des éléments de verrouillage saillant et les brancards longitudinaux 17 des ouvertures complémentaires.

D'autres systèmes d'immobilisation, avec des premiers et des seconds éléments d'immobilisation 24, 25 différents, peuvent bien sûr être imaginés. On peut aussi envisager par exemple que le simple fait d'encastrer le châssis du dispositif de verrouillage 16 entre les brancards longitudinaux 17 de la coque déposable 15 suffise à son immobilisation pour le transport ferroviaire. Dans ce cas, les premiers éléments d'immobilisation 24 sont les faces latérales intérieures des brancards longitudinaux 17 et les seconds éléments d'immobilisation 25 sont les faces latérales extérieures du dispositif de verrouillage 16.

Afin de faciliter la mise en place du dispositif de verrouillage sur la coque déposable 15 comme il sera expliqué par la suite, la coque déposable 15 comporte en outre, de préférence, un dispositif de positionnement 28 situé au niveau de la portion d'extrémité avant 20 des brancards longitudinaux 17. Selon un mode de réalisation représenté sur les figures 6 à 8 et 9 à 13 il s'agit d'une simple butée de positionnement 29 avant et fixe, contre laquelle le dispositif de verrouillage 16 vient en butée lorsque les ouvertures 27 se trouvent vis-à-vis des plots de verrouillage saillant 26.

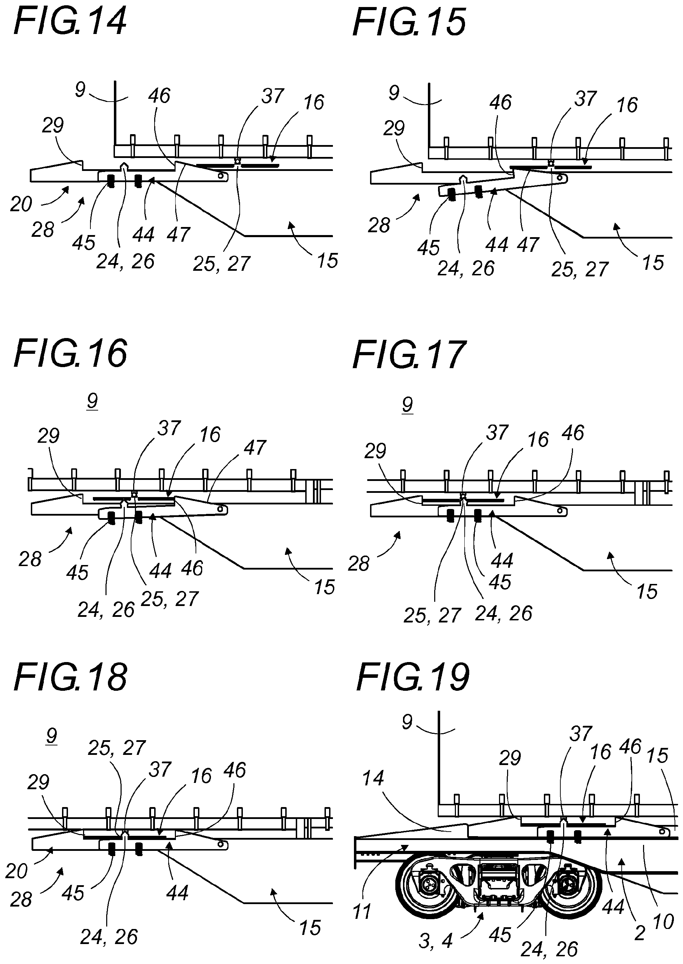

Sur les figures 14 à 26, d'autres modes de réalisation de ces éléments d'immobilisation 24 et de ce dispositif de positionnement 28 ont été représentés.

Afin de faciliter son engagement et sa mise en place dans le réceptacle 7 de la structure ferroviaire 2, la coque déposable 15 peut comporter en outre un dispositif de centrage 30, par exemple réalisé sous la forme d'un ensemble de deux chanfreins longitudinaux 31 qui relient les parois latérales 19 à la paroi de fond 18 de la coque déposable.

Enfin, la coque déposable 15 peut avantageusement comporter en sous-face de sa paroi de fond 18 plusieurs éléments d'appui 32, qui se présentent comme des plaques ou des patins d'écrasement, de surface limitée. Lorsque la semi-remorque roule sur la paroi de fond 18, ces éléments d'appui 32 permettent à la paroi de fond 18 de rester en appui sur le sol même lorsque celui-ci n'est pas parfaitement plat. On évite ainsi une déformation trop importante de la coque déposable 15 dont les parois latérales 19 pourraient sinon avoir tendance à se refermer l'une vers l'autre.

Un premier exemple de réalisation de ces éléments d'appui 32, sous la forme d'un ensemble de plaques rectangulaires, a été illustré sur la figure 7.

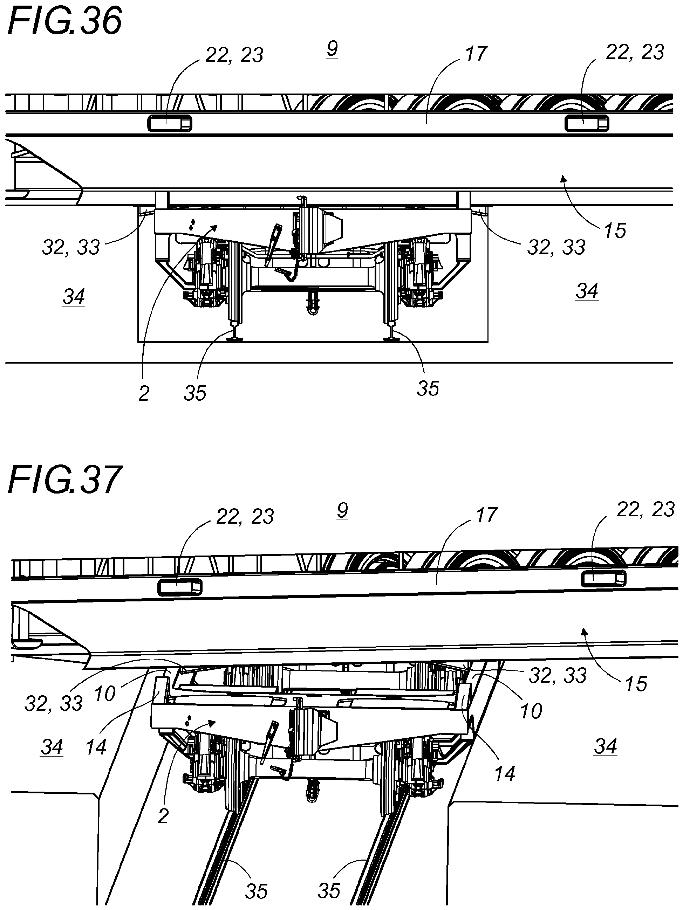

Un deuxième exemple de réalisation a été représenté sur la figure 8. Les éléments d'appui 32 sont, cette fois, formés de quatre cales préférentiellement en forme de coin 33 qui sont disposées en deux rangées obliques. Ils sont ainsi placés et orientés, de manière à pouvoir servir de butée contre les bords des quais 34 comme illustré sur la figure 36 ou contre les longerons supérieurs 9 de la structure ferroviaire 2 comme illustré sur la figure 37, afin de s'opposer au glissement de la coque déposable 15 dans le cas d'une dépose en épi de la coque déposable 15, par-dessus la structure ferroviaire et en travers de la voie ferrée 35. Dans ce cas, l'écartement entre les deux rangées obliques d'éléments d'appui 32 correspond à celui existant entre les deux bords des quais 34 ou entre les deux longerons supérieurs 9 de la structure ferroviaire 2.

Cette variante est spécialement conçue pour une utilisation dans des terminaux dédiés dans lesquels la voie ferrée 35 est réalisée plus basse que les quais 34 (en fosse), la structure ferroviaire 2 affleurant au niveau des quais 34. Elle peut néanmoins être utilisée de manière classique dans des terminaux non dédiés et non équipés d'une voie ferrée noyée entre deux quais surélevés par rapport à elle. Pour procéder au chargement/déchargement, elle est alors déposée au sol sur le quai, comme la variante précédente. Dans ce cas, les cales en forme de coin 33 peuvent avantageusement être prévues pivotantes, repliables ou escamotables, afin de pouvoir poser la coque déposable 15 directement sur un sol plan sans l'endommager.

Un exemple préférentiel de dispositif de verrouillage 16 a été représenté seul sur la figure 5.

Le dispositif de verrouillage 16 comporte une base 36, par exemple en forme de cadre et de préférence sensiblement plate et d'épaisseur faible pour ne pas encombrer l'espace libre 21, sur laquelle est assemblée une sellette d'accouplement 37 destinée à recevoir et à immobiliser le pivot d'attelage de la semi-remorque 9. Selon un mode de réalisation préférentiel, le dispositif de verrouillage 16 comporte en outre un système d'inclinaison et/ou de réglage de la hauteur 38 de la sellette d'accouplement 37 par rapport à la base 36.

La base 36 est une traverse qui se fixe de manière amovible à l'avant de la coque déposable 15 et qui vient pour cela reposer par ses extrémités 39, sur la portion d'extrémité avant 20 des brancards longitudinaux 17.

Dans la présente demande, on appellera « traverse » une pièce de hauteur limitée, et de préférence sensiblement plate, qui s'étend transversalement par rapport à la direction des brancards longitudinaux 17 et qui est fixée à ceux-ci par ses extrémités.

Cette traverse présente également, par exemple en sous-face, des interfaces mécaniques adaptées aux moyens de préhension d'un engin de manutention et permettant ainsi son verrouillage sur un tracteur de manutention pour procéder au chargement des semi-remorques présentes sur le quai comme il sera décrit par la suite.

Selon un mode de réalisation préféré, la base 36 du dispositif de verrouillage 16 comporte, au niveau de chacune de ses deux extrémités 39, un profilé de bordure 40 de section en L inversé, qui constitue une équerre de calage à rebord plan d'appui destiné à reposer sur la portion d'extrémité avant 20 du brancard longitudinal 17 correspondant de la coque déposable 15.

C'est au niveau de ces extrémités 39 que se situent les seconds éléments d'immobilisation 25 du dispositif de verrouillage 16. Il s'agit préférentiellement d'ouvertures 27 réalisées dans le profilé de bordure 40.

La face latérale extérieure de la base 36, qui correspond à la partie verticale du L, peut être avantageusement conformée en chanfrein dans sa partie basse afin de faciliter son engagement entre les brancards longitudinaux 17 de la coque 15. La partie supérieure de cette face latérale extérieure vient alors en appui contre les brancards 17 assurant ainsi le centrage, voire l'immobilisation latérale du dispositif de verrouillage 16. De telles dispositions, éventuellement complétées par un ensemble de butées longitudinales, peuvent parfois être suffisantes pour immobiliser le dispositif de verrouillage 16 pour le transport ferroviaire, une retenue verticale n'étant pas toujours nécessaire.

Comme le dispositif de verrouillage 16 est fixé sur la coque déposable 15, non pas au niveau de la paroi de fond 18, mais sur les portions d'extrémité avant 20 des brancards longitudinaux 17 à la manière d'une traverse, l'espace libre 21 reste entièrement libre une fois le dispositif de verrouillage 16 mis en place. Il peut donc être occupé par un bogie 3 du wagon-poche 1.

Comme on le voit sur la figure 2, lorsque l'ensemble déposable 8 selon l'invention est engagé dans le réceptacle 7 de la structure ferroviaire 2, les brancards longitudinaux 17 de la coque déposable 15 sont portés par les longerons supérieurs 10 de la structure ferroviaire 2 sur lesquels ils reposent, et la partie d'extrémité avant 20 des brancards longitudinaux 17 ainsi que le dispositif de verrouillage 16 s'étendent par-dessus la partie d'extrémité 11 correspondante de la structure ferroviaire 2.

La répartition du poids de la semi-remorque 9 devant être supporté par le wagon-poche 1 est optimisée. En effet, une partie importante de ce poids, correspondant à celui de la partie avant de la semi-remorque et s'exerçant par l'intermédiaire de son pivot d'attelage, est portée par la partie d'extrémité 11 de la structure ferroviaire 2 et donc directement par le bogie d'extrémité 4, le réceptacle 7 n'ayant à supporter que la partie du poids correspondant à l'arrière de la semi-remorque qui s'exerce par l'intermédiaire de ses roues.

En outre, grâce à ce porte-à-faux très avantageux, la longueur du réceptacle 7 de la structure ferroviaire 2 peut être réduite par rapport à celle des wagons-poches antérieurs dans lesquelles le dispositif de verrouillage devait également être logé. La structure ferroviaire est ainsi beaucoup plus courte et compacte que celles de l'art antérieur, ce qui permet une meilleure inscription du chargement dans le gabarit ferroviaire. En outre, pour une même longueur totale de train formé de l'assemblage successif de tels wagons-poches, on augmente significativement le nombre de wagons, ce qui est synonyme de gains substantiels pour l'exploitant.

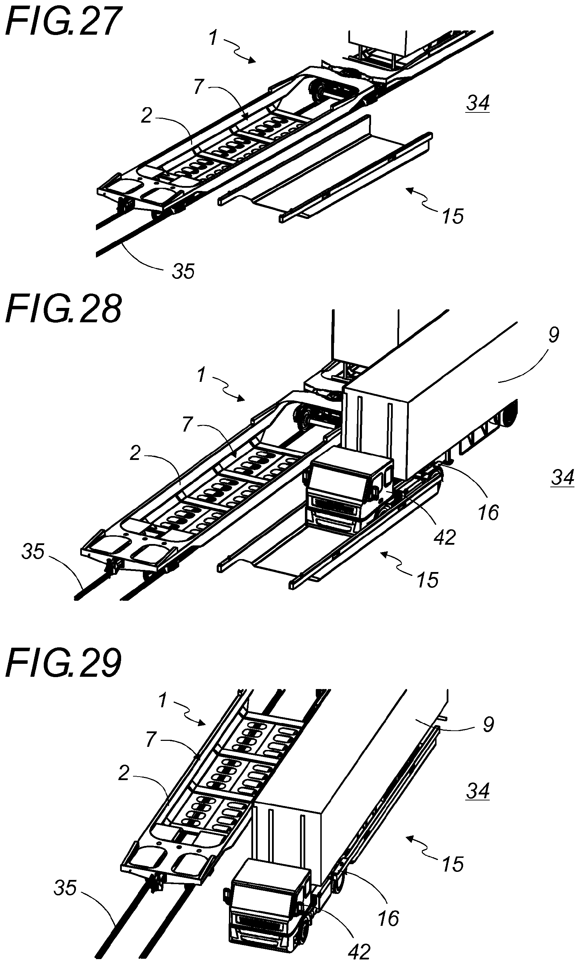

Le procédé de chargement selon l'invention d'une semi-remorque sur l'ensemble déposable 8, puis sur la structure ferroviaire 2 du wagon-poche 1va maintenant être décrit. Deux variantes de ce procédé ont été schématisées sur les figures 27 à 35.

La première de ces variantes, illustrée sur les figures 27 à 31, peut être réalisée dans n'importe quel terminal de chargement, dédié ou non au transport multimodal. Elle ne nécessite aucun aménagement particulier de la voie ferrée 35 ou des quais 34.

Pour procéder au chargement, la coque déposable 15 est posée à plat sur le quai 34 à proximité de la structure ferroviaire 2, comme illustré sur la figue 27. La coque déposable 15 peut provenir d'une zone de stockage dans le terminal ou avoir été apportée par le wagon-poche 1, qui voyageait à vide ou qui a été préalablement déchargé d'un précédent chargement. Elle est placée sur le quai à l'aide d'un engin de manutention 41 classique selon l'équipement se trouvant dans le terminal. Il peut s'agir indifféremment d'un engin de levage tel qu'une grue ou un portique, ou comme représenté d'un véhicule roulant tel qu'un « reach stacker » par exemple.

La semi-remorque 9 qui a été préalablement abandonnée par son tracteur routier, en appui sur ses béquilles, est équipée du dispositif de verrouillage 16 par un tracteur de manutention 42 qui vient le placer en engageant la sellette d'accouplement 37 avec son pivot d'attelage. Si nécessaire, un réglage de la hauteur de la sellette d'accouplement 37 par rapport à la base 36 du dispositif de verrouillage 16 est réalisé pour assurer une position de transport de la semi-remorque 9 sensiblement horizontale. Ce réglage permet également d'adapter la hauteur de la sellette d'accouplement 37 en fonction du modèle de semi-remorque 9 afin d'avoir une hauteur totale constante de l'ensemble. Cette mise en place du dispositif de verrouillage 16 sur la semi-remorque peut se faire indifféremment avant, après ou simultanément à la dépose de la coque déposable 15 sur le quai, selon le souhait de l'exploitant.

Le tracteur de manutention 42 amène ensuite la semi-remorque 9 équipée du dispositif de verrouillage 16 sur la coque déposable 15, comme représenté sur la figure 28. Pour cela, il passe entre les brancards longitudinaux 17 et roule sur la paroi de fond 18 de la coque déposable 15, en marche avant ou en marche arrière, jusqu'à placer la semi-remorque 9 en position de chargement sur la coque déposable 15.

Lorsque le dispositif de verrouillage 16 se trouve au-dessus de la zone d'extrémité avant 20 des brancards longitudinaux 17, le tracteur de manutention 42 abaisse le dispositif de verrouillage 16, afin de mettre en prise les premiers éléments d'immobilisation 24 avec les seconds éléments d'immobilisation 25 et ainsi de bloquer le dispositif de verrouillage 16 sur la coque déposable 15, comme illustré sur la figure 29. Cette opération peut être avantageusement facilitée par la présence de chanfreins au niveau des faces latérales extérieures de la traverse.

La semi-remorque 9 se trouve alors arrimée par son pivot d'attelage à l'ensemble déposable 8 selon l'invention en léger appui sur ses béquilles suite à une flèche de la portion d'extrémité 20 des brancards 17 de la coque 15. La semi-remorque 9 est ainsi immobilisée dans une position fixe, à la fois longitudinalement, latéralement et verticalement si besoin, par rapport à la coque 15 quels que soient sa hauteur et son empattement. Aucun risque n'est donc à craindre lors des opérations suivantes de manutention.

Le tracteur de manutention 42 est alors libéré et s'éloigne de la semi-remorque 9. Il peut pour cela traverser complètement la coque déposable 15.

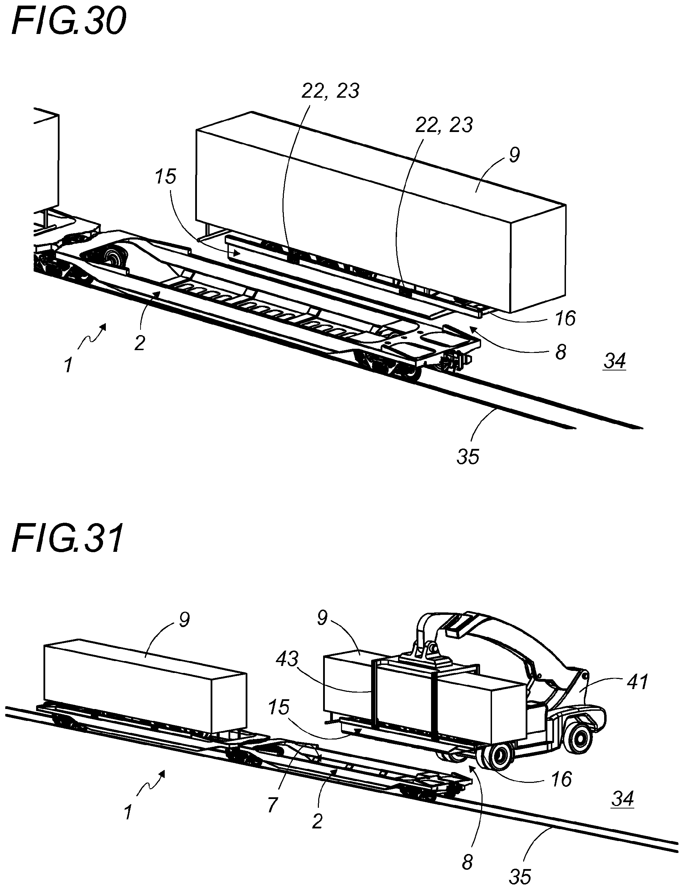

L'ensemble déposable 8 selon l'invention, chargé de la semi-remorque 9, est alors prêt à être placé sur la structure ferroviaire comme illustré sur la figure 30.

L'engin de manutention 41 saisit alors l'ensemble déposable 8 chargé, en engageant ses moyens de préhension 43, par exemple à pinces, dans les interfaces mécaniques 22 de la coque déposable 15, et le soulève comme illustré sur la figure 31.

Il vient alors le placer sur la structure ferroviaire 2 en engageant la coque déposable 15 dans le réceptacle 7 de celle-ci. Il est aidé pour cela par le dispositif de centrage 30 qui facilite l'insertion de la coque 15 dans le réceptacle 7. L'engin de manutention 41 libère l'ensemble déposable 8 lorsque les brancards longitudinaux 17 se trouvent en appui sur les longerons supérieurs 10 de la structure ferroviaire 2 et de préférence sur les zones d'appui localisées de ceux-ci, qui sont préférentiellement ajustables en fonction de la charge, afin d'optimiser les flèches et les contraintes de la structure ferroviaire 2 ou de la coque 15.

Ces zones d'appui localisées peuvent avantageusement être situées au plus près du dispositif de verrouillage 16 pour limiter les contraintes dans les brancards longitudinaux 17 et compenser la flèche des portions d'extrémité avant 20 de ces brancards 17, ce qui permet également par voie de conséquence de relever légèrement l'avant de la semi-remorque 9 et ainsi de délester la charge reprise par ses béquilles lors du transport ferroviaire.

Le bon positionnement de l'ensemble déposable 8 sur la structure ferroviaire 2 est garanti par la présence des butées de positionnement 14 dans la zone d'extrémité des longerons supérieurs 10 et contre lesquelles les extrémités des brancards longitudinaux 17 viennent en butée. L'ensemble déposable 8 est ainsi bloqué latéralement par l'insertion de la coque déposable 15 dans le réceptacle 7 et longitudinalement par ces butées de positionnement 14. Le chargement de l'ensemble déposable 8 sur la structure ferroviaire 2 est alors terminé et le wagon-poche 1 est prêt au départ. La semi-remorque 9 est parfaitement arrimée sans que l'opérateur n'ait eu à intervenir sur le wagon. Elle se trouve en effet immobilisée dans une position centrée et connue, à la fois longitudinalement et verticalement et latéralement. Le gabarit ferroviaire est ainsi respecté quelle que soit la charge.

Une fois le transport terminé, les opérations de déchargement de la semi-remorque 9 s'effectuent de la même façon en sens inverse.

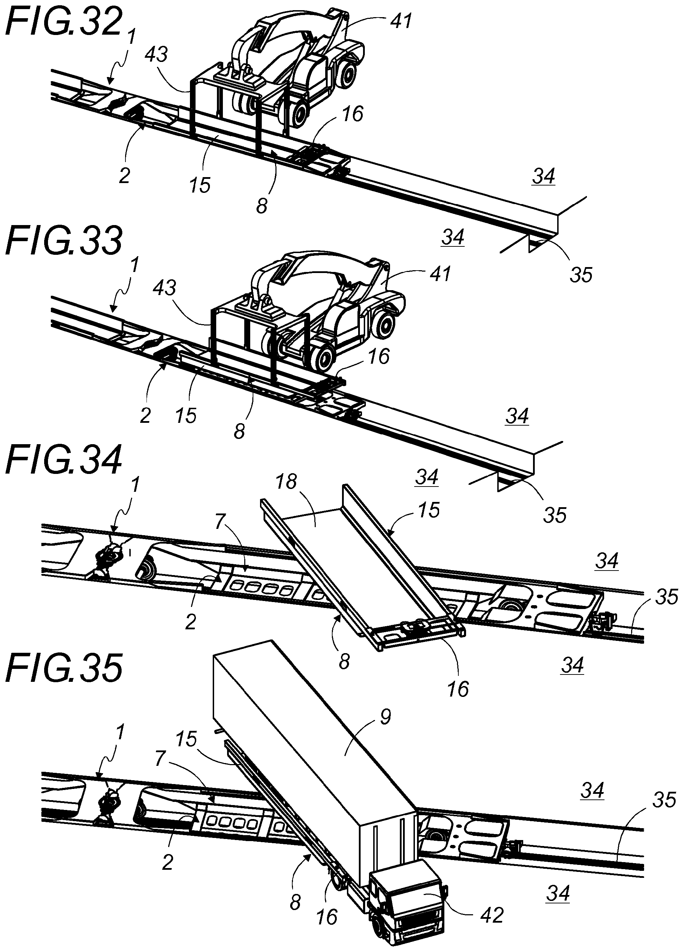

La deuxième variante du procédé de chargement a été illustrée sur les figures 32 à 35. Cette variante nécessite une zone de chargement/déchargement aménagée dans laquelle la voie ferrée 35 est encastrée, c'est-à-dire que le niveau de celle-ci est abaissé par rapport à celui des quais 34, de manière que le haut de la structure ferroviaire 2 affleure sensiblement au niveau des quais 34 lorsque le wagon-poche 1 se trouve dans cette zone.

Selon cette variante, pour procéder au chargement, la coque déposable 15 est préalablement saisie par l'engin de manutention 41 qui engage ses moyens de préhension dans les interfaces mécaniques 22, comme représenté sur la figure 32.

L'engin de manutention 41 soulève alors la coque déposable 15 au-dessus de la structure ferroviaire 2 et la fait sortir du réceptacle 7, comme représenté sur la figure 33.

Il la fait alors pivoter d'un angle approprié quelconque pour la placer en épi, par exemple d'environ 45° et la redépose par-dessus la structure ferroviaire 2, en travers par rapport à la voie ferrée 35, comme illustré sur la figure 34.

Sur les figures 32 et 33 et dans les paragraphes ci-dessus, on a supposé que l'ensemble déposable 8 se trouvait initialement dans le réceptacle 7 de la structure ferroviaire 2. Dans le cas contraire, par exemple dans le cas où il proviendrait d'une zone de stockage du terminal, l'engin de manutention 41 le placerait directement en épi par-dessus la structure ferroviaire 2, en travers par rapport à la voie ferrée 35, comme illustré sur la figure 34.

Lorsqu'elle se trouve dans cette position, la coque déposable 15 est maintenue longitudinalement en position par les éléments d'appui 32 présents en sous-face de sa paroi de fond 18. En effet, ces éléments d'appui 32, disposés en deux rangées obliques d'écartement adapté, se retrouvent en butée de sens opposé contre, selon les variantes, les deux bords du quai 34 comme représenté sur la figure 36, ou contre les deux longerons supérieurs 10 de la structure ferroviaire 2 comme représenté sur la figure 37. On peut ainsi éviter un glissement longitudinal de la coque déposable 15, notamment lorsque le tracteur de manutention 42 et la semi-remorque 9 roulent sur la paroi de fond 18.

Simultanément, avant ou après, la semi-remorque 9 est équipée du dispositif de verrouillage 16 par le tracteur de manutention 42.

Si comme représenté, le dispositif de verrouillage 16 était initialement monté sur la coque déposable 15, il doit d'abord être démonté de celle-ci pour être placé sur la semi-remorque.

Ensuite et comme dans la variante précédente, le tracteur de manutention 42 tirant la semi-remorque 9 monte sur la coque déposable 15 et roule sur sa paroi de fond 18 jusqu'à placer la semi-remorque 9 en position de chargement comme représenté sur la figure 35.

Le tracteur de manutention 42 positionne le dispositif de verrouillage 16 sur la portion d'extrémité 20 des brancards longitudinaux 17, puis se libère et s'éloigne, disponible pour charger une nouvelle semi-remorque si nécessaire

Avantageusement, le tracteur de manutention 42 peut monter sur la coque déposable 15 d'un côté de la voie ferrée 35 et, après avoir traversé la coque déposable 15, en redescendre de l'autre côté, ce qui est particulièrement intéressant en exploitation.

L'engin de manutention 41 saisit alors l'ensemble déposable 8 chargé et le soulève à nouveau. Il le refait pivoter pour le remettre dans la même orientation que la structure ferroviaire 2, puis le place sur la structure ferroviaire 2 en engageant la coque déposable 15 dans le réceptacle 7.

La fin du procédé de chargement est identique à la variante précédente. Les opérations de déchargement s'effectuent de la même façon en sens inverse.

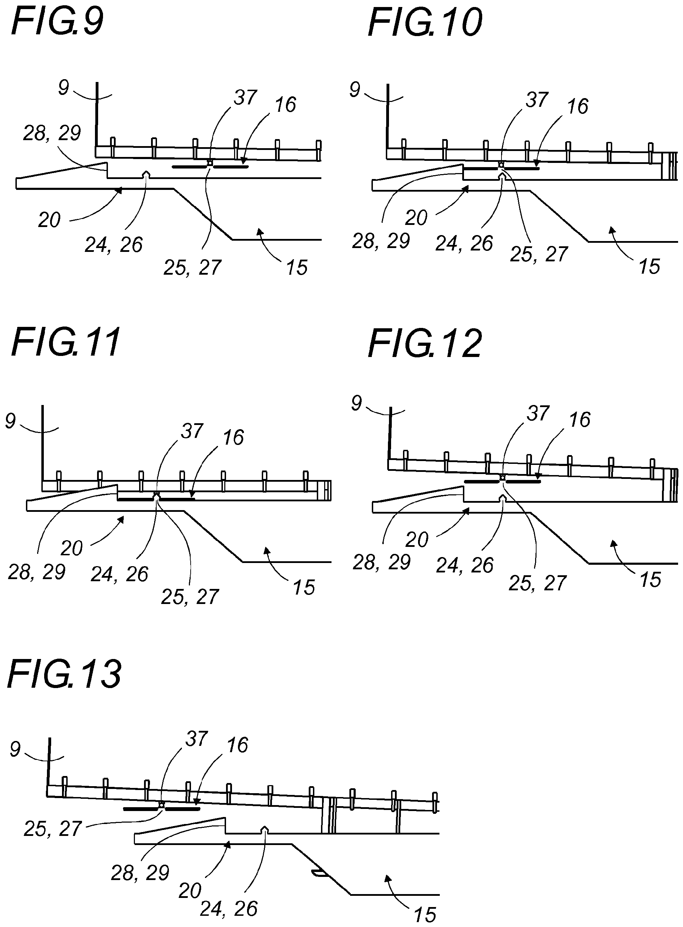

Pendant ces opérations de chargement, la présence d'un dispositif de positionnement 28 sur les brancards longitudinaux 17 rend la mise en place du dispositif de verrouillage 16 sur la coque déposable 15, beaucoup plus facile pour l'opérateur. Les différentes étapes de cette mise en place ont été schématisées sur les figures 9 à 26 pour trois variantes de dispositif de positionnement 28.

Dans la variante de base, représentée sur les figures 6 à 13, les premiers éléments d'immobilisation 24 sont des plots de verrouillage saillant 26 fixes s'élevant de la portion d'extrémité 20 et le dispositif de positionnement est constitué des butées de positionnement 29 fixe se trouvant à l'avant de la portion d'extrémité avant 20 et dont la hauteur est supérieure à celle des plots de verrouillage saillant 26. Avec cette variante de base, le processus de mise en place est le suivant :
Pendant le chargement, le tracteur de manutention 42 gonfle ses suspensions de manière que les extrémités 39 du dispositif de verrouillage 16, qui est verrouillé par sa sellette d'accouplement 37 sur le pivot d'attelage de la semi-remorque 9, se trouvent à une hauteur comprise entre celle des butées de positionnement 29 et celle des plots de verrouillage saillant 26 comme illustré sur la figure 9.

Pour charger la semi-remorque 9 sur la coque déposable 15, le tracteur de manutention 42 roule sur la paroi de fond 18 et la traverse en passant entre les brancards longitudinaux 17. Il rapproche ainsi le dispositif de verrouillage 16 des portions d'extrémité avant 20 et avance progressivement jusqu'à ce que les extrémités 39 du dispositif de verrouillage arrivent en butée contre les butées de positionnement 29 comme représenté sur la figure 10.

L'opérateur stoppe alors le tracteur de manutention 42, car cette butée lui indique que le dispositif de verrouillage 16 est correctement positionné pour sa mise en place, c'est-à-dire que les ouvertures 27 du dispositif de verrouillage 16 se trouvent exactement au-dessus des plots de verrouillage saillants 26 de la coque déposable 15.

Il lui suffit alors de dégonfler les suspensions du tracteur de manutention 42 ou de faire usage d'un moyen de levage, pour abaisser le dispositif de verrouillage 16 et faire pénétrer les plots de verrouillage saillants 26 dans les ouvertures 27, jusqu'à poser le dispositif de verrouillage 16 sur les portions d'extrémité avant 20 des brancards longitudinaux 17 comme représenté sur la figure 11.

Par cet engagement des plots 26 dans les ouvertures 27, le dispositif de verrouillage 16 est bloqué latéralement et longitudinalement sur la coque déposable 15 et la semi-remorque 9 est arrimée à celle-ci. Le tracteur de manutention 42 peut se dégager car l'ensemble déposable 8 est prêt à être chargé sur la structure ferroviaire 2.

Par la suite, pour procéder au déchargement de la semi-remorque 9, il suffit à l'opérateur, après avoir réattelé le tracteur de manutention 42, de gonfler ses suspensions suffisamment pour soulever le dispositif de verrouillage 16 au-dessus des portions d'extrémité 20 jusqu'à une hauteur dépassant les butés de positionnement 29 comme illustré sur la figure 12.

Il lui suffit alors de faire avancer le tracteur de manutention 42, pour faire passer le dispositif de verrouillage 16 au-dessus des butées de positionnement 29, comme illustré sur la figure 13, et pour emmener la semi-remorque 9 hors de la coque déposable 15.

Dans la deuxième variante représentée sur les figures 14 à 19, les premiers éléments d'immobilisation 24 sont des plots de verrouillage saillant 26 qui sont escamotables. Pour cela, ces plots sont réalisés à l'extrémité d'un levier 44 articulé par son autre extrémité sur le brancard longitudinal 17 correspondant, de manière à pouvoir pivoter vers le bas pour s'effacer sous la portion d'extrémité avant 20.

Chacun de ces leviers 44 est contraint en position haute par un dispositif de rappel élastique 45 par exemple sous la forme d'un ou plusieurs ressorts comme représenté.

Le dispositif de positionnement 28 comprend comme précédemment des butées de positionnement 29 fixes qui se trouvent à l'avant de la portion d'extrémité avant 20, mais dont la hauteur peut avantageusement être moins importante que dans la variante précédente.

Le dispositif de positionnement 28 est complété par une butée de coincement 46, située sur le levier 44 à l'arrière du plot de verrouillage saillant 26 et qui est ainsi escamotable. Sa face arrière est avantageusement réalisée sous la forme d'une rampe 47 progressive qui facilite le pivotement vers le bas du levier 44 à l'arrivée du dispositif de verrouillage 16 comme expliqué ci-dessous.

Pour la mise en place du dispositif de verrouillage 16, le tracteur de manutention 42 gonfle légèrement ses suspensions de manière que les extrémités 39 du dispositif de verrouillage 16 se trouvent juste au-dessus des brancards longitudinaux 17 comme illustré sur la figure 14.

Il rapproche le dispositif de verrouillage 16 des portions d'extrémité avant 20 en roulant sur la paroi de fond 18 de la coque déposable 15. Pendant ce mouvement, le dispositif de verrouillage 16 se trouve d'abord en appui contre les rampes 47 comme illustré sur la figure 14.

La poursuite du mouvement du tracteur de manutention provoque l'avancée du dispositif de verrouillage 16 contre les rampes 47 et entraine le pivotement vers le bas des leviers 44, ce qui permet au dispositif de verrouillage 16 de passer par-dessus les butées de coincement 46 situées à l'arrière comme représenté sur la figure 15.

Dès que le dispositif de verrouillage 16 a entièrement franchi les butées de coincement 46, les leviers 44 commencent à remonter sous l'effet des dispositifs de rappel élastiques 45. Leur remontée est cependant limitée par l'appui de leurs plots de verrouillage saillant 26 contre le dispositif de verrouillage 16 comme illustré sur la figure 16.

L'opérateur stoppe le tracteur de manutention 42 lorsque le dispositif de verrouillage 16 arrive en butée contre les butées de positionnement 29 fixes comme représenté sur la figure 17. Dans cette position, les ouvertures 27 du dispositif de verrouillage 16 se trouvent exactement au-dessus des plots de verrouillage saillants 26 qui les traversent sous l'effet des dispositifs de rappel élastiques 45 qui poussent les leviers 44 vers le haut comme représenté sur la figure 17.

Par exemple, Il suffit alors à l'opérateur de dégonfler les suspensions du tracteur de manutention 42, pour abaisser le dispositif de verrouillage 16 jusque sur les portions d'extrémité avant 20 comme représenté sur la figure 18. Le dispositif de verrouillage 16 est alors parfaitement maintenu, à la fois par l'engagement des plots saillants 26 dans les ouvertures 27, par les butés de positionnement 29 à l'avant et à l'arrière par les butées de coincement 46 qui le bloquent longitudinalement et par le centrage latéral des profilés de bordures 40 contre les brancards 17 de la coque 15. L'ensemble déposable 8 peut alors être chargé sur la structure ferroviaire 2 après le départ du tracteur de manutention 42.

Comme on le voit sur la figure 19, le verrouillage du dispositif de verrouillage 16 sur la coque déposable 15 est encore renforcé lorsque l'ensemble déposable 8 est en position de transport sur la structure ferroviaire 2. En effet, comme les brancards longitudinaux 17 reposent alors sur les longerons supérieurs 10, les dispositifs de rappel 45 sont comprimés et les leviers 44 bloqués en position haute, ce qui garantit un engagement maximal des plots de verrouillage saillants 26 dans les ouvertures 27.

Par la suite, pour procéder au déchargement de la semi-remorque 9, il suffit à l'opérateur de réatteler le tracteur de manutention 42 et de gonfler ses suspensions pour soulever le dispositif de verrouillage 16 au-dessus des portions d'extrémité 20 jusqu'à une hauteur dépassant les butés de positionnement 29 fixes, puis d'avancer pour emmener la semi-remorque 9 hors de la coque déposable 15.

Comme ces butées de positionnement 29 sont moins hautes que dans la variante précédente, le dispositif de verrouillage 16 n'a pas besoin d'être soulevé aussi haut. La semi-remorque 9 est donc avantageusement moins inclinée par le gonflement des suspensions, ce qui diminue un éventuel risque d'endommagement par frottement du bas de sa partie arrière.

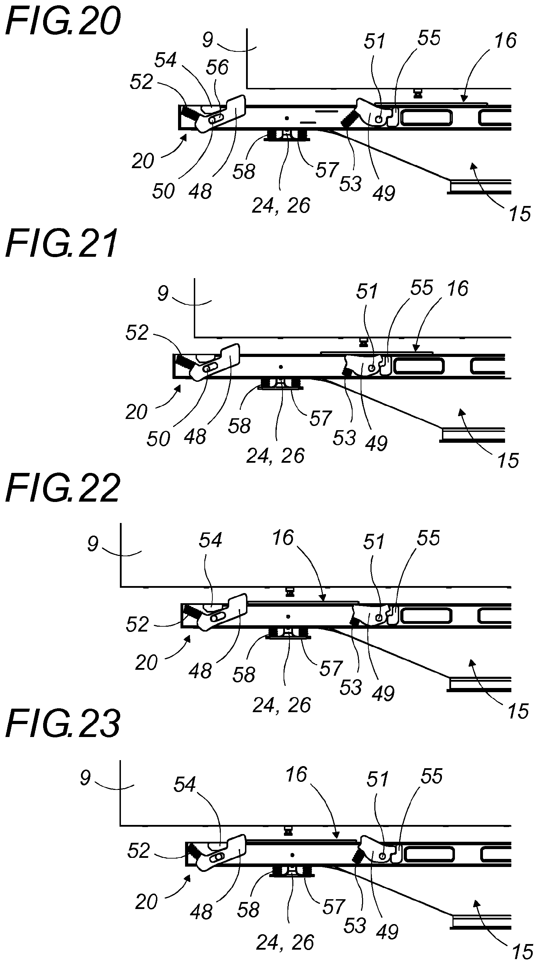

La troisième variante représentée sur les figures 20 à 26 permet de charger et de décharger la semi-remorque 9 sans avoir à la soulever à l'avant. Tout risque d'endommagement de sa partie arrière est ainsi évité.

Pour cela, les butées de positionnement 29 et de coincement 46 du dispositif de positionnement 28 sont cette fois réalisées sous la forme de cames effaçables respectivement 48 à l'avant et 49 à l'arrière.

Ces cames effaçables 48 et 49 sont montées pivotantes autour d'un axe transversal, respectivement 50 et 51, fixé à la portion d'extrémité avant 20 des brancards. Elles sont contraintes chacune en position haute saillante par un dispositif de rappel élastique, respectivement 52 et 53, par exemple de type ressort comme représenté et sont limitées en mouvement par une butée fixe, respectivement 54 et 55, contre laquelle elles arrivent en butée.

La came effaçable avant 48 comporte une ouverture oblongue 56 à travers laquelle est engagé son axe transversal 52 de pivotement, ce qui lui permet d'effectuer une séquence particulière de mouvements qui sera exposée ci-dessous.

Les premiers éléments d'immobilisation 24 sont des plots de verrouillage saillants 26 qui, comme dans la deuxième variante, sont escamotables. Ces plots 26 sont cette fois réalisés sur une platine 57 qui est repoussée vers le bas par un ensemble de ressorts 58 de manière qu'en position de repos, les plots de verrouillage 26 ne dépassent pas au-dessus de la portion d'extrémité avant 20 des brancards 17 comme on peut le voir sur la figure 20.

Pour procéder au chargement, l'opérateur règle les suspensions pour que la semi-remorque 9 soit en position de transport horizontale, sans avoir à soulever l'avant de la semi-remorque pour mettre en place le dispositif de verrouillage 16. Les extrémités 39 du dispositif de verrouillage 16 se trouvent à la hauteur de la face supérieure des brancards longitudinaux 17 comme illustré sur la figure 20.

Lorsque le tracteur de manutention 42 avance, le dispositif de verrouillage 16 commence par se trouver en appui contre la came effaçable arrière 49 comme illustré sur la figure 20.

L'avancée du dispositif de verrouillage 16 provoque le pivotement de cette came 49 autour de son axe 51 et son effacement progressif vers le bas en comprimant le dispositif de rappel élastique 53, ce qui permet au dispositif de verrouillage 16 de passer par-dessus la came 49 comme représenté sur la figure 21.

Le mouvement d'avancée du dispositif de verrouillage se poursuit jusqu'à ce qu'il arrive en butée contre la came effaçable avant 48 comme illustré sur la figure 22. Les plots de verrouillage 26 sont alors en position escamotée et ne gênent absolument pas ce mouvement.

L'opérateur peut poursuivre le mouvement d'avancée du dispositif de verrouillage 16 en poussant la came 48 et en comprimant le dispositif de rappel élastique 52 correspondant, jusqu'à ce que la came 48 arrive en butée contre la butée fixe 54, comme représenté sur la figure 23. Ce mouvement d'avancée de la came 48 est rendu possible par le coulissement de son axe 50 de pivotement dans l'ouverture oblongue 56.

Dans cette position, le dispositif de verrouillage 16 a complètement dépassé la came effaçable arrière 49, qui pivote sous l'effet du dispositif de rappel élastique 53 jusqu'à revenir en appui contre la butée fixe 55. Elle se retrouve ainsi en position saillante et constitue pour le dispositif de verrouillage 16 une butée de coincement 46.

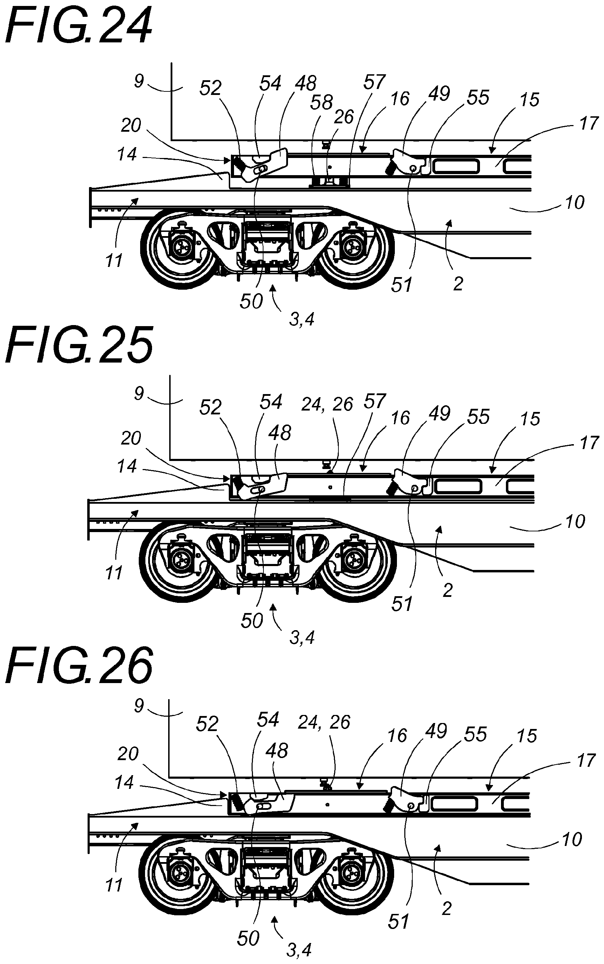

Le dispositif de verrouillage est ainsi complètement bloqué longitudinalement, à l'avant par la came effaçable 48 qui est saillante et en butée à l'avant contre la butée fixe 54 et à l'arrière par la came effaçable 49 qui est saillante et en butée à l'arrière contre la butée fixe 55. Il est également bloqué latéralement par les profilés de bordure 40 qui viennent en appui à l'intérieur des brancards 17 de la coque 15. Dans cette position, les ouvertures 27 du dispositif de verrouillage 16 se trouvent positionnées juste au-dessus des plots de verrouillage saillants 26 et l'ensemble déposable 8 peut être chargé sur la structure ferroviaire 2 comme illustré sur la figure 24.

Lorsque l'ensemble déposable 8 est placé sur la structure ferroviaire 2, les brancards longitudinaux 17 sont posés sur les longerons supérieurs 10, ce qui fait remonter les platines 57 en comprimant les ressorts 58. De ce fait, les plots de verrouillage saillants 26 portés par ces platines 57 viennent traverser les ouvertures 27 du dispositif de verrouillage 16 en face desquelles ils étaient positionnés, complétant ainsi l'arrimage de la semi-remorque 9.

Lors du mouvement de descente de l'ensemble déposable 8 et comme illustré sur la figure 25, l'extrémité inférieure des cames effaçables 48 vient en appui contre les longerons supérieurs 10 de la structure ferroviaire 2, ce qui fait progressivement pivoter ces cames 48 à l'horizontale.

Lorsque l'ensemble déposable 8 est complètement posé sur la structure ferroviaire 2, l'extrémité supérieure des cames 48 se retrouve à une hauteur légèrement inférieure à celle du dispositif de verrouillage 16. Les cames 48 sont alors poussées vers le dispositif de verrouillage 16 par les dispositifs de rappel élastiques 52 et s'engagent partiellement en dessous de celui-ci du fait du coulissement de leur axe de pivotement 50 dans leur ouverture oblongue 56, comme représenté sur la figure 26. Les cames avant 48 sont alors complètement effacées et ne constituent plus aucune surépaisseur gênante pour le déchargement de la semi-remorque 9.

Une fois le transport effectué, l'ensemble déposable 8 est déchargé hors de la structure ferroviaire par l'engin de manutention 41 et son soulèvement entraîne automatiquement le dégagement des plots de verrouillage saillants 26 hors des ouvertures 27 sous l'effet des ressorts 58 qui repoussent la platine 57. Les cames 48 restent cependant en position effacée sous le dispositif de verrouillage 16.

Une fois réattelé à la semi-remorque 9, le tracteur de manutention 42 n'a donc plus qu'à avancer, sans avoir à soulever la semi-remorque 9, pour la décharger de la coque déposable 15.

De manière évidente, l'invention ne se limite pas aux modes de réalisation préférentiels décrits précédemment et représentés sur les différentes figures, l'homme du métier pouvant y apporter de nombreuses modifications et imaginer d'autres variantes sans sortir ni de la portée, ni du cadre de l'invention définis par les revendications ci-après.

Ainsi par exemple, les butées de positionnement 29 décrites ci-dessus comme se trouvant à l'avant de la portion d'extrémité avant 20 des brancards longitudinaux 47 peuvent être situées à l'arrière de ces portions d'extrémité avant 20 dans un mode de réalisation prévu pour un chargement des semi-remorques 9 en marche arrière. Dans ce cas, lorsque le dispositif de positionnement 28 en est pourvu, les butées de coincement 46 se trouvent à l'avant de la portion d'extrémité avant 20 des brancards longitudinaux 47 afin de pouvoir coincer longitudinalement le dispositif de verrouillage 16 entre les butées de positionnement 29 et les butées de coincement 46 lorsqu'il a atteint une position longitudinale optimale pour que les seconds éléments d'immobilisation 25 puissent coopérer avec les premiers éléments d'immobilisation 24,

## Revendications

1. Procédé de chargement d'une semi-remorque (9) routière sur un wagon-poche (1) comprenant une structure ferroviaire (2) à réceptacle (7) et un ensemble déposable (8) de chargement/déchargement d'une semi-remorque (9) routière comportant :
- une coque déposable (15), destinée à être engagée de manière amovible dans le réceptacle (7) de la structure ferroviaire (2), qui comprend une paroi de fond (18), deux parois latérales (19) et deux brancards longitudinaux (17) situés en partie supérieure au-dessus des parois latérales, l'ensemble formant une poche de chargement pour la semi-remorque (9), et qui comprend également des premiers éléments d'immobilisation (24) et des interfaces mécaniques (22) aptes à coopérer avec des moyens de préhension (43) d'un engin de manutention (41) ; et
- un dispositif de verrouillage (16), qui comprend des seconds éléments d'immobilisation (25) coopérant avec les premiers éléments d'immobilisation (24) pour assurer la fixation amovible du dispositif de verrouillage (16) sur la coque déposable (15) ; et une sellette d'accouplement (37) du pivot d'attelage de la semi-remorque (9) afin d'arrimer la semi-remorque (9) à la coque déposable (15) ; procédé comprenant l'étape consistant à :
- saisir la coque déposable (15) en engageant les moyens de préhension (43) d'un engin de manutention (41) dans les interfaces mécaniques (22) de la coque déposable (15), et, à l'aide de l'engin de manutention (41), soulever la coque déposable (15) et la déposer hors du réceptacle (7) de la structure ferroviaire ; procédé **caractérisé en ce qu'**il comprend les étapes suivantes:
- équiper le dispositif de verrouillage (16) sur la semi-remorque (9) préalablement abandonnée par son tracteur routier, en engageant le pivot d'attelage de la semi-remorque (9) dans la sellette d'accouplement (37) du dispositif de verrouillage (16) ;
- charger la semi-remorque (9) équipée du dispositif de verrouillage (16) sur la coque déposable (15) au moyen d'un tracteur de manutention (42), en la faisant rouler en marche avant ou en marche arrière sur la paroi de fond (18) de la coque déposable (15), entre les parois latérales (19) et les brancards longitudinaux (17) ;
- à l'aide du tracteur de manutention (42), positionner le dispositif de verrouillage (16) sur la coque déposable (15), dans une position permettant aux seconds éléments d'immobilisation (25) de coopérer avec les premiers éléments d'immobilisation (24) ;
- libérer le tracteur de manutention (42) et l'éloigner de l'ensemble déposable (8) ;
- saisir l'ensemble déposable (8) chargé en engageant les moyens de préhension (43) de l'engin de manutention (41) dans les interfaces mécaniques (22) de la coque déposable (15) et soulever l'ensemble déposable (8) chargé ;
- à l'aide de l'engin de manutention (41), placer l'ensemble déposable (8) chargé sur la structure ferroviaire (2), en engageant la coque déposable (15) dans le réceptacle (7) de la structure ferroviaire (2).

2. Procédé de chargement selon la revendication 1, **caractérisé en ce que**, avant d'être saisie et soulevée à l'aide de l'engin de manutention (41), la coque déposable (15) est engagée dans le réceptacle (7) de la structure ferroviaire (2) ou se trouve dans une zone de stockage.

3. Procédé de chargement selon la revendication 1 ou 2, la structure ferroviaire (2) se trouvant sur une voie ferrée (35) à proximité d'un quai (34), **caractérisé en ce que**, pendant l'étape consistant à déposer la coque déposable (15) hors du réceptacle (7) de la structure ferroviaire (2), l'engin de manutention (41) dépose la coque déposable (15) à côté de la structure ferroviaire (2) sur le quai (34), ou par-dessus la structure ferroviaire (2) en travers par rapport à la voie ferrée (35).

4. Procédé de chargement selon la revendication 3, **caractérisé en ce que**, lorsque la coque déposable (15) est déposée par-dessus la structure ferroviaire (2) en travers par rapport à la voie ferrée (35), on maintient la coque déposable (15) en position longitudinale au moyen d'éléments d'appui (32) présents en sous-face de sa paroi de fond (18) qui se retrouvent en butée contre les bords du quai (34) ou de la structure ferroviaire (2).

5. Procédé de chargement selon l'une quelconque des revendications précédentes, **caractérisé en ce que**, lorsque la coque déposable (15) est soulevée et déposée hors du réceptacle (7) de la structure ferroviaire (2) à l'aide de l'engin de manutention (41), une première semi-remorque se trouve sur la coque déposable (15) et **en ce que** cette première semi-remorque est déchargée hors de la coque déposable avant qu'une deuxième semi-remorque soit chargée sur la coque déposable, lors de l'étape consistant à charger la semi-remorque (9) équipée du dispositif de verrouillage (16) sur la coque déposable (15) au moyen d'un tracteur de manutention (42), en la faisant rouler en marche avant ou en marche arrière sur la paroi de fond (18) de la coque déposable (15), entre les parois latérales (19) et les brancards longitudinaux (17).

6. Procédé de chargement selon l'une quelconque des revendications précédentes, **caractérisé en ce que**, lorsque la semi-remorque (9) équipée du dispositif de verrouillage (16) est chargée sur la coque déposable (15) au moyen d'un tracteur de manutention (42), le tracteur de manutention (42) rapproche le dispositif de verrouillage (16) des brancards longitudinaux (17) et se déplace progressivement jusqu'à ce que le dispositif de verrouillage (16) arrive en butée contre des butées de positionnement (29) d'un dispositif de positionnement (28) qui se trouve sur la coque déposable (15), ce qui indique que le dispositif de verrouillage (16) est correctement positionné longitudinalement pour que les seconds éléments d'immobilisation (25) puissent coopérer avec les premiers éléments d'immobilisation (24), avant que lesdits premiers éléments d'immobilisation (24) soient en prise avec lesdits seconds éléments d'immobilisation (25).

7. Procédé de chargement selon la revendication 6, **caractérisé en ce qu'**après avoir positionné longitudinalement le dispositif de verrouillage (16), l'opérateur règle sa hauteur en dégonflant les suspensions du tracteur de manutention (42).

8. Procédé de chargement selon la revendication 6 ou 7, **caractérisé en ce que** l'on bloque longitudinalement le dispositif de verrouillage (16) d'un côté par lesdites butées de positionnement (29) et de l'autre par des butées de coincement (46) du dispositif de positionnement (28).

9. Ensemble déposable (8) de chargement/déchargement d'une semi-remorque (9) routière, sur une structure ferroviaire (2) à réceptacle (7) d'un wagon de type wagon-poche (1), permettant de mettre en œuvre le procédé de chargement selon l'une quelconque des revendications précédentes,
cet ensemble déposable (8) comportant :
- une coque déposable (15) destinée à être engagée de manière amovible dans le réceptacle (7) de la structure ferroviaire (2) et comprenant une paroi de fond (18) sur laquelle la semi-remorque (9) est chargée, et des interfaces mécaniques (22) aptes à coopérer avec des moyens de préhension d'un engin de manutention afin de réaliser le levage et la dépose de la coque déposable (15) ; et
- un dispositif de verrouillage (16), comprenant une sellette d'accouplement (37) du pivot d'attelage de la semi-remorque (9), qui se fixe de manière amovible sur la coque déposable (15), d'un côté de celle-ci défini comme étant le côté avant, afin d'arrimer la semi-remorque (9) à la coque déposable (15);
la coque déposable (15) comprenant en outre :
- deux brancards longitudinaux (17), situés en partie supérieure de la coque déposable (15) et comportant chacun une portion d'extrémité avant (20) qui s'étend en porte-à-faux vers l'avant au-delà de la paroi de fond (18),
- des premiers éléments d'immobilisation (24) situés sur la portion d'extrémité avant (20) des brancards longitudinaux (17), et
- deux parois latérales (19), qui bordent latéralement la paroi de fond (18) et s'étendent vers le haut jusqu'aux brancards longitudinaux (17), ces parois latérales (19) formant avec la paroi de fond (18) une poche de chargement pour la semi-remorque (9) ; et
le dispositif de verrouillage (16) comprenant en outre :
- une base (36) sur laquelle est assemblée la sellette d'accouplement (37), cette base (36) étant une traverse qui se fixe de manière amovible par ses extrémités (39) sur la portion d'extrémité avant (20) des brancards longitudinaux (17), et
- des seconds éléments d'immobilisation (25) qui coopèrent avec les premiers éléments d'immobilisation (24) pour assurer la retenue du dispositif de verrouillage (16) sur la coque déposable (15) ;
ensemble déposable (8) tel que, lorsque le dispositif de verrouillage (16) est fixé sur la coque déposable (15), l'espace (21) situé sous la portion d'extrémité avant (20) des brancards longitudinaux (17) reste libre,
**caractérisé en ce que** la coque déposable (15) comporte en outre un dispositif de positionnement (28), comprenant deux butées de positionnement (29), situées une sur chaque portion d'extrémité avant (20) des brancards longitudinaux (17), qui, lorsque le dispositif de verrouillage (16) est en butée contre ces butées de positionnement (29) sans que lesdits premiers éléments d'immobilisation (24) soient en prise avec lesdits seconds éléments d'immobilisation (25), garantissent un positionnement longitudinal adapté du dispositif de verrouillage (16) par rapport à la coque déposable (15) pour que les premiers éléments d'immobilisation (24) et les seconds éléments d'immobilisation (25) puissent coopérer.

10. Ensemble déposable (8) selon la revendication 9 **caractérisé en ce que** le dispositif de positionnement (28) comprend en outre deux butées de coincement (46), situées une sur chaque portion d'extrémité avant (20) des brancards longitudinaux (17), qui permettent de bloquer longitudinalement le dispositif de verrouillage (16) entre les butées de positionnement (29) et les butées de coincement (46) du dispositif de positionnement (28).

11. Ensemble déposable (8) selon la revendication 10 **caractérisé en ce qu'**au moins les butées de positionnement (29) ou les butées de coincement (46) sont des butées mobiles, effaçables, escamotables ou basculantes.

12. Ensemble déposable (8) selon l'une quelconque des revendications 9 à 11 **caractérisé en ce que** la coque déposable (15) comporte en outre un ensemble d'éléments d'appui (32) situés en sous-face de la paroi de fond (18), qui sont de préférence pivotants, repliables ou escamotables.

13. Ensemble déposable (8) selon la revendication 12 **caractérisé en ce que** lesdits éléments d'appui (32) sont disposés selon deux rangées obliques.

14. Ensemble déposable (8) selon l'une quelconque des revendications 9 à 13, **caractérisé en ce que** les premiers éléments d'immobilisation (24) et les seconds éléments d'immobilisation (25) sont indifféremment pour les uns des plots de verrouillage saillants (26), fixes ou escamotables, et pour les autres des ouvertures (27) dans lesquelles les plots de verrouillage saillants (26) s'engagent afin d'assurer la retenue du dispositif de verrouillage (16) sur la coque déposable (15).

15. Ensemble déposable (8) selon l'une quelconque des revendications 9 à 14, **caractérisé en ce que** le dispositif de verrouillage (16) comporte un système d'inclinaison ou de réglage de la hauteur (38) de la sellette d'accouplement (37) par rapport à la base (36) et des interfaces mécaniques aptes à coopérer avec des moyens de préhension d'un engin de manutention.

16. Wagon-poche (1) comprenant une structure ferroviaire (2) à réceptacle (7) et un ensemble déposable (8) de chargement/déchargement d'une semi-remorque (9) routière, supporté par la structure ferroviaire (2) et comprenant une coque déposable (15) engagée de manière amovible dans le réceptacle (7) de la structure ferroviaire (2), **caractérisé en ce que** l'ensemble déposable (8) est conforme à l'une quelconque des revendications 9 à 15.

17. Wagon-poche (1) selon la revendication 16 **caractérisé en ce que** la structure ferroviaire (2) comporte en outre des zones d'appui localisées, de hauteur réglable, sur lesquelles vient reposer l'ensemble déposable (8) lorsque la coque déposable (15) est engagée dans le réceptacle (7).

18. Wagon-poche (1) selon la revendication 16 ou 17 **caractérisé en ce qu'**il s'agit d'un wagon double ou d'un wagon de type rame.

## Patentansprüche

1. Verfahren zum Laden eines Sattelaufliegers (9) für den Straßentransport in einen Taschenwagen (1) mit einem Güterwagen (2) mit Güterbereich (7) und einer abnehmbaren Einheit (8) zum Be- und Entladen eines Sattelaufliegers (9) für den Straßentransport, das besteht aus:
- einer abnehmbaren Schale (15), dazu bestimmt, wegnehmbar in den Güterbereich (7) des Güterwagens (2) eingesetzt zu werden, die aus einem Boden (18), zwei Seitenwänden (19) und zwei Langträgern (17), angeordnet im oberen Teil über den Seitenwänden, besteht, die Einheit bildet eine Ladetasche für den Sattelauflieger (9), und umfasst außerdem erste Sicherungselemente (24) und mechanische Schnittstellen (22,) die mit den Greifvorrichtungen (43) eines Fördergerätes (41) kooperieren können; und
- einer Verriegelungsvorrichtung (16), die zweite Sicherungselemente (25) enthält, die mit den ersten Sicherungselementen (24) zusammenarbeiten um die wegnehmbare Blockierung der Verriegelungsvorrichtung (16) auf der abnehmbaren Schale (15) sicherzustellen; und einen Kupplungssattel (37) des Kupplungszapfens des Sattelaufliegers (9), um den Sattelauflieger (9) an der abnehmbaren Schale (15) zu befestigen;
das Verfahren umfasst einen Schritt, der darin besteht
- die abnehmbare Schale (15) zu ergreifen, indem die Greifvorrichtungen (43) eines Fördergerätes (41) in die mechanischen Schnittstellen (22) der abnehmbaren Schale (15) greifen, und mittels des Fördergerätes (41), die abnehmbare Schale (15) anzuheben und außerhalb des Güterbereichs (7) des Güterwagens abzusetzen;
das Verfahren ist **dadurch gekennzeichnet, dass** es die folgenden Schritte umfasst:
- den Sattelauflieger (9), dessen Zugfahrzeug sich zuvor entfernt hat, mit der Verriegelungsvorrichtung (16) ausrüsten, indem der Kupplungszapfen des Sattelaufliegers (9) im Kupplungssattel (37) der Verriegelungsvorrichtung (16) eingerastet wird;
- den mit der Verriegelungsvorrichtung (16) ausgerüsteten Sattelauflieger (9) auf die abnehmbare Schale (15) laden, mittels eines Schleppers (42), indem er vor- oder rückwärts auf den Boden (18) der abnehmbaren Schale (15), zwischen den Seitenwänden (19) und den Langträgern (17), gerollt wird
- mit Hilfe des Schleppers (42) Verriegelungsvorrichtung (16) auf der abnehmbaren Schale (15), in eine Position bringen, in der die zweiten Sicherungselemente (25) mit den ersten Sicherungselementen (24) kooperieren können,
- Schlepper (42) freimachen und von der abnehmbaren Einheit entfernen
- die aufgeladene, abnehmbare Einheit (8) ergreifen, indem die Greifvorrichtungen (43) des Fördergerätes (41) in die mechanischen Schnittstellen (22) der abnehmbaren Schale (15) greifen und die aufgeladene abnehmbare Einheit (8) anheben;
- mit Hilfe eines Fördergerätes (41), die aufgeladene abnehmbare Einheit (8) auf den Güterwagen (2) setzen, indem die abnehmbare Schale (15) in den Güterbereich (7) des Güterwagens (2) eingesetzt wird.

2. Ladeverfahren nach Anspruch 1, **dadurch gekennzeichnet, dass** bevor sie ergriffen und mit Hilfe eines Fördergerätes (41), angehoben wird, die abnehmbare Schale (15) in den Güterbereich (7) des Güterwagens (2) eingesetzt ist oder sich in einer Lagerzone befindet.

3. Ladeverfahren nach Anspruch 1 oder 2, der Güterwagen (2) befindet sich dabei auf Schienen (35) in der Nähe eines Ladekais (34), **dadurch gekennzeichnet, dass** während des Schritts, der darin besteht, die abnehmbare Schale (15) außerhalb des Güterbereichs (7) des Güterwagens (2) abzusetzen, das Fördergerät (41) die abnehmbare Schale (15) neben dem Güterwagen (2) auf dem Ladekai (34), oder über den Güterwagen (2), quer zur Schiene (35) gesehen, absetzt.

4. Ladeverfahren nach Anspruch 3, **dadurch gekennzeichnet, dass** wenn die abnehmbare Schale (15) über den Güterwagen (2) quer zur Schiene (35) abgesetzt wird, die abnehmbare Schale (15) in der Längsposition gehalten wird durch Stützelemente (32), die auf der Unterseite ihres Bodens (18) vorhanden sind, die dabei einen Anschlag zur Kante des Ladekais (34) oder des Güterwagens (2) bilden.

5. Ladeverfahren nach irgendeinem der vorangehenden Ansprüche, **dadurch gekennzeichnet, dass** wenn die abnehmbare Schale (15) angehoben und außerhalb des Güterbereichs (7) des Güterwagens (2) mit Hilfe eines Fördergeräts (41) abgesetzt wird, ein erster Sattelauflieger sich auf der abnehmbaren Schale (15) befindet und dass dieser erste Sattelauflieger außerhalb der abnehmbaren Schale abgesetzt wird, bevor ein zweiter Sattelauflieger auf die abnehmbare Schale geladen wird, bei dem Schritt, der darin besteht, den mit der Verriegelungsvorrichtung (16) ausgerüsteten Sattelauflieger (9) mittels eines Schleppers (42), auf die abnehmbare Schale (15) zu laden, indem er vor- oder rückwärts auf den Boden (18) der abnehmbaren Schale (15), zwischen den Seitenwänden (19) und den Langträgern (17) gerollt wird.

6. Ladeverfahren nach irgendeinem der vorangehenden Ansprüche, **dadurch gekennzeichnet, dass** wenn der mit der Verriegelungsvorrichtung (16) ausgerüstete Sattelauflieger (9) mittels eines Schleppers (42) auf die abnehmbare Schale (15) geladen wird, der Schlepper (42) die Verriegelungsvorrichtung (16) in die Nähe der Langträger (17) bringt und sich progressiv bewegt, bis die Verriegelungsvorrichtung (16) gegen Positionsanschläge (29) einer Positionierungsvorrichtung (28) stößt, die sich auf der abnehmbaren Schale (15) befindet, was anzeigt, dass die Verriegelungsvorrichtung (16) richtig längs positioniert ist, so dass die zweiten Sicherungselemente (25) mit den ersten Sicherungselementen (24) kooperieren können, bevor diese ersten Sicherungselemente (24) in diese zweiten Sicherungselemente (25) greifen.

7. Ladeverfahren nach Anspruch 6, **dadurch gekennzeichnet, dass** nachdem die Verriegelungsvorrichtung (16) in Längsrichtung positioniert wurde, die Bedienperson die Höhe einstellt, indem Luft aus den Aufhängungen des Schleppers (42) gelassen wird.

8. Ladeverfahren nach Anspruch 6 oder 7, **dadurch gekennzeichnet, dass** die Verriegelungsvorrichtung (16) in Längsrichtung durch diese Positionsanschläge (29) blockiert wird und andererseits durch die Klemmanschläge (46) der Positioniervorrichtung (28).

9. Abnehmbare Einheit (8) zum Auf-/ Abladen eines Sattelaufliegers (9) für die Straße auf einen Güterwagen (2) mit Güterbereich (7) eines Waggons vom Typ Taschenwagen (1), mit der das Ladeverfahren nach irgendeinem der vorangehenden Ansprüche umgesetzt werden kann.
diese abnehmbare Einheit (8) enthält:
- eine abnehmbare Schale (15), dazu bestimmt, wegnehmbar im Güterbereich (7) des Güterwagens (2) einzurasten, und mit einem Boden (18), auf den der Sattelauflieger (9) geladen wird sowie mechanischen Schnittstellen (22), die mit den Greifvorrichtungen eines Fördergerätes kooperieren können, um das Anheben und Absetzen der abnehmbaren Schale (15) auszuführen; und
- eine Verriegelungsvorrichtung (16), die einen Kupplungssattel (37) des Kupplungszapfens des Sattelaufliegers (9), enthält, der abnehmbar auf der abnehmbaren Schale (15) befestigt wird, auf einer ihrer Seiten, die als ihre Vorderseite definiert wird, um den Sattelauflieger (9) an der abnehmbaren Schale (15) zu befestigen,
die abnehmbare Schale (15) umfasst außerdem:
- zwei Langträger (17), angeordnet im oberen Bereich der abnehmbaren Schale (15) die jeweils einen Abschnitt des vorderen Endstücks (20) enthalten, das freitragend nach vorne über den Boden (18) hinaus verläuft,
- erste Sicherungselemente (24) angeordnet auf Abschnitt des vorderen Endstücks (20) des Langträgers (17), und
- zwei Seitenwände (19), die seitlich den Boden (18) begrenzen und nach oben bis zu den Langträgern (17) verlaufen, diese Seitenwände (19) bilden zusammen mit dem Boden (18) eine Ladetasche für den Sattelauflieger (9); und
die Verriegelungsvorrichtung (16) enthält außerdem:
- eine Basis (36) auf der der Kupplungssattel (37) montiert ist, bei dieser Basis (36) handelt es sich um eine Querstrebe, die abnehmbar an ihren Enden (39) am Abschnitt des vorderen Endstücks (20) des Langträgers (17) befestigt werden kann, und
- zweite Sicherungselemente (25), die mit den ersten Sicherungselementen (24) kooperieren, um den Halt der Verriegelungsvorrichtung (16) auf der abnehmbaren Schale (15) zu gewährleisten;
abnehmbare Einheit (8) so dass, wenn die Verriegelungsvorrichtung (16) auf der abnehmbaren Schale (15) befestigt wird, der Raum (21) unter dem Abschnitt des vorderen Endstücks (20) des Langträgers (17) frei bleibt,
**dadurch gekennzeichnet, dass** die abnehmbare Schale (15) außerdem eine Positionierungsvorrichtung (28), mit zwei Positionsanschlägen (29) enthält, von denen jeweils einer auf jedem Abschnitt des vorderen Endstücks (20) des Langträgers (17) positioniert ist, die wenn die Verriegelungsvorrichtung (16) gegen diese Positionsanschläge (29) stößt, ohne dass diese ersten Sicherungselemente (24) in diese zweiten Sicherungselemente (25) greifen, eine richtige Positionierung in Längsrichtung der Verriegelungsvorrichtung (16) bezogen auf die abnehmbare Schale (15) enthalten, damit die ersten Sicherungselemente (24) und die zweiten Sicherungselemente (25) miteinander kooperieren können.

10. Abnehmbare Einheit (8) nach Anspruch 9 **dadurch gekennzeichnet, dass** die Positionierungsvorrichtung (28) außerdem zwei Klemmanschläge (46) enthält, von denen jeweils einer sich auf jedem Abschnitt des vorderen Endstücks (20) des Langträger (17) befindet, die es ermöglichen die Verriegelungsvorrichtung (16) zwischen den Positionsanschlägen (29) und den Klemmanschlägen (46) der Positionierungsvorrichtung (28) zu blockieren.

11. Abnehmbare Einheit (8) nach Anspruch 10 **dadurch gekennzeichnet, dass** mindestens die Positionsanschläge (29) oder die Klemmanschläge (46) mobile Anschläge sind, schwenkbar, ausziehbar oder klappbar.

12. Abnehmbare Einheit (8) nach einem beliebigen der Ansprüche 9 bis 11, **dadurch gekennzeichnet, dass** die abnehmbare Schale (15) außerdem eine Einheit aus Stützelementen (32) enthält, angeordnet auf der Unterseite des Bodens (18), die vorzugsweise schwenkbar, klappbar oder ausziehbar sind.

13. Abnehmbare Einheit (8) nach Anspruch 12 **dadurch gekennzeichnet, dass** diese Stützelemente (32) in zwei schrägen Reihen angeordnet sind.

14. Abnehmbare Einheit (8) nach einem beliebigen der Ansprüche 9 bis 13, **dadurch gekennzeichnet, dass** die ersten Sicherungselemente (24) und die zweiten Sicherungselemente (25) unterscheidungslos einerseits herausragende Verriegelungsstifte (26) sind, fest oder einschiebbar und andererseits Öffnungen (27), in die die herausragenden Verriegelungsstifte (26) einrasten, um den Halt der Verriegelungsvorrichtung (16) auf der abnehmbaren Schale (15) zu gewährleisten.

15. Abnehmbare Einheit (8) nach einem beliebigen der Ansprüche 9 bis 14, **dadurch gekennzeichnet, dass** die Verriegelungsvorrichtung (16) eine Neigungs-oder Höheneinstellungssystem (38) für den Kupplungssattel (37), bezogen auf die Basis (36) und mechanische Schnittstellen enthält, die in der Lage sind, mit den Greifvorrichtungen eines Fördergerätes zu kooperieren.

16. Taschenwagen (1) mit einem Güterwagen (2) mit Güterbereich (7) und einer abnehmbaren Einheit (8) zum Auf-/ Abladen eines Sattelaufliegers (9) für die Straße, gestützt vom Güterwagen (2) und mit einer abnehmbaren Schale (15) wegnehmbar im Güterbereich (7) des Güterwagens (2) eingerastet, **dadurch gekennzeichnet, dass** die abnehmbare Einheit (8) einem beliebigen der Ansprüche 9 bis 15 entspricht.

17. Taschenwagen (1) nach Anspruch 16, **dadurch gekennzeichnet, dass** der Güterwagen (2) außerdem lokal begrenzte Auflagezonen enthält, mit einstellbarer Höhe, auf die die abnehmbare Einheit (8) zu Aufliegen kommt, wenn die abnehmbare Schale (15) im Güterbereich (7) eingerastet ist.

18. Taschenwagen (1) nach Anspruch 16 oder 17, **dadurch gekennzeichnet, dass** es sich um einen doppelten Waggon oder einen Waggon vom Typ Zugkomposition handelt.

## Claims

1. A method for loading a road semi-trailer (9) on a pocket wagon (1) comprising a railway structure (2) with a receptacle (7) and a removable assembly (8) for loading/unloading a road semi-trailer (9) comprising:
- a removable shell (15), designed to be removably engaged in the receptacle (7) of the railway structure (2), which comprises a bottom wall (18), two side walls (19) and two longitudinal beams (17) located in the upper portion above the side walls, with the assembly forming a loading pocket for the semi-trailer (9), and which also comprises first immobilization elements (24) and mechanical interfaces (22) able to cooperate with the gripping elements (43) of a handling machine (41); and
- a locking device (16), which comprises second immobilization elements (25) which cooperate with the first immobilization elements (24) to ensure the removable attachment of the locking device (16) on the removable shell (15); and a coupling seat (37) for the semi-trailer (9) coupling pin to anchor the semi-trailer (9) to the removable shell (15);
this method including the step consisting of:
- grasping the removable shell (15) by engaging the gripping means (43) of a handling machine (41) in the mechanical interfaces (22) of the removable shell (15), and, using the handling machine (41), raising the removable shell (15) and placing it out of the railway structure receptacle (7);
this method being **characterized in that** it includes the following steps:
- fitting the locking device (16) on the semi-trailer (9) which was previously left by its road tractor, by engaging the semi-trailer (9) coupling pin into the coupling seat (37) of the locking device (16);
- loading the semi-trailer (9) equipped with the locking device (16) onto the removable shell (15) using a handling tractor (42), running it forward or in reverse onto the bottom wall (18) of the removable shell (15), between the side walls (19) and the longitudinal beams (17);
- using the handling tractor (42), placing the locking device (16) on the removable shell (15), in a position allowing the second immobilization elements (25) to cooperate with the first immobilization elements (24);
- releasing the handling tractor (42) and moving it away from the removable assembly (8);
- grasping the loaded removable assembly (8) by engaging the gripping means (43) of the handling machine (41) in the mechanical interfaces (22) of the removable shell (15) and lifting the loaded removable assembly (8);
- using the handling machine (41), placing the loaded removable assembly (8) onto the railway structure (2), by engaging the removable shell (15) in the receptacle (7) of the railway structure (2).

2. A loading method according to claim 1, **characterized in that** before being grasped and lifted with the handling machine (41), the removable shell (15) is engaged in the receptacle (7) of the railway structure (2) or is in a storage zone.

3. A loading method according to claim 1 or 2, the railway structure (2) being on a railway line (35) near a platform (34), **characterized in that** during the step consisting in placing the removable shell (15) out of the receptacle (7) of the railway structure (2), the handling machine (41) places the removable shell (15) beside the railway structure (2) on the platform (34) or on top of the railway structure (2) crosswise with respect to the railway line (35).

4. A loading method according to claim 3, **characterized in that** when the removable shell (15) is placed on top of the railway structure (2) crosswise with respect to the railway line (35), the removable shell (15) is maintained in longitudinal position using support elements (32) present on the underside of its bottom wall (18) which abut against the edges of the platform (34) or of the railway structure (2).

5. A loading method according to any of the preceding claims, **characterized in that** when the removable shell (15) is lifted and placed out of the receptacle (7) of the railway structure (2) using the handling machine (41), a first semi-trailer is on the removable shell (15) and **in that** this first semi-trailer is unloaded out of the removable shell before a second semi-trailer is loaded on the removable shell, during the step consisting in loading the semi-trailer (9) equipped with the locking device (16) onto the removable shell (15) using a handling tractor (42), running it forward or in reverse on the bottom wall (18) of the removable shell (15), between the side walls (19) and the longitudinal beams (17).

6. A loading method according to any one of the preceding claims, **characterized in that** when the semi-trailer (9) equipped with the locking device (16) is loaded onto the removable shell (15) using a handling tractor (42), the handling tractor (42) approaches the locking device (16) to the longitudinal beams (17) and moves gradually until the locking device (16) abuts against positioning stops (29) of a positioning device (28) which is on the removable shell (15), which indicates that the locking device (16) is correctly positioned longitudinally so that the second immobilization elements (25) can cooperate with the first immobilization elements (24), before said first immobilization elements (24) are engaged with said second immobilization elements (25).

7. A loading method according to claim 6, **characterized in that** after positioning the locking device (16) longitudinally, the operator adjusts its height by deflating the suspension of the handling tractor.

8. A loading method according to claim 6 or 7, **characterized in that** the locking device (16) is blocked longitudinally on one side by said positioning stops (29) and on the other by jamming stops (46) of the positioning device (28).

9. Removable assembly (8) for loading/unloading a road semi-trailer (9) on a railway structure (2) with a receptacle (7) of a pocket wagon (1) type wagon, enabling the loading method according to any one of the preceding claims to be implemented,
this removable assembly (8) comprising:
- a removable shell (15), designed to be removably engaged in the receptacle (7) of the railway structure (2) and comprising a bottom wall (18) onto which the semi-trailer (9) is loaded, and mechanical interfaces (22) able to cooperate with the gripping elements of a handling machine to lift and lower the removable shell (15); and
- a locking device (16), comprising a coupling seat (37) for the semi-trailer (9) coupling pin, which is removably attached to the removable shell (15), on a side of it defined as being the front side, in order to anchor the semi-trailer (9) to the removable shell (15);
the removable shell (15) further comprises:
- two longitudinal beams (17), located in the upper portion of the removable shell (15), and each comprising a front end portion (20) which extends in a cantilevered fashion towards the front beyond the bottom wall (18),
- first immobilization elements (24) located on the front end portion (20) of the longitudinal beams (17), and
- two side walls (19), which border laterally the bottom wall (18) and extend upwards to the longitudinal beams (17), these side walls (19) forming with the bottom wall (18) a loading pocket for the semi-trailer (9); and
the locking device (16) further comprising:
- a base (36) on which the coupling seat (37) is assembled, with this base (36) being a crossbeam which is removably attached by its ends (39) on the front end portion (20) of the longitudinal beams (17), and
- second immobilization elements (25) which cooperate with the first immobilization elements (24) to hold the locking device (16) on the removable shell (15);
removable assembly (8), such that when the locking device (16) is secured to the removable shell (15), the space (21) under the front end portion (20) of the longitudinal beams (17) remains free,
**characterized in that** the removable shell (15) further comprises a positioning device (28), comprising two positioning stops (29), located one on each front end portion (20) of the longitudinal beams (17), which, when the locking mechanism (16) abuts against these positioning stops (29) without said first immobilization elements (24) being engaged with said second immobilization elements (25), guarantee an adapted longitudinal positioning for the locking device (16) with respect to the removable shell (15) so that the first immobilization elements (24) and the second immobilization elements (25) can cooperate.

10. A removable assembly (8) according to claim 9 **characterized in that** the positioning device (28) further comprises two jamming stops (46), located one on each front end portion (20) of the longitudinal beams (17), which enable the locking device (16) to be blocked longitudinally between the positioning stops (29) and the jamming stops (46) of the positioning device (28).

11. A removable assembly (8) according to claim 10, **characterized in that** at least the positioning stops (29) or the jamming stops (46) are mobile, removable, retractable or tilting stops.

12. A removable assembly (8) according to any of claims 9 to 11, **characterized in that** the removable shell (15) further comprises a set of support element (32) located on the underside of the bottom wall (18) which are preferably pivotable, foldable or retractable.

13. A removable assembly (8) according to claim 12 **characterized in that** said support elements (32) are laid out in two oblique rows.

14. A removable assembly (8) according to any one of claims 9 to 13, **characterized in that** the first immobilization elements (24) and the second immobilization elements (25) are indifferently as far as some are concerned fixed or retractable protruding locking posts (26) and as far as the others are concerned openings (27) into which the protruding locking posts (26) engage to secure the locking device (16) on the removable shell (15).

15. A removable assembly (8) according to any one of claims 9 to 14, **characterized in that** the locking device (16) comprises a tilting or height adjustment system (38) for the coupling seat (37) with respect to the base (36) and mechanical interfaces able to cooperate with the gripping elements of a handling machine.

16. A pocket wagon (1) comprising a railway structure (2) having a receptacle (7) and a removable assembly (8) to load/unload a road semi-trailer (9), supported by the railway structure (2) and comprising a removable shell (15) removably engaged in the receptacle (7) of the railway structure (2), **characterized in that** the removable assembly (8) complies with any one of the claims 9 to 15.

17. A pocket wagon (1) according to claim 16, **characterized in that** the railway structure (2) further comprises localized support zones, of adjustable height, onto which the removable assembly (8) comes to rest when the removable shell (15) is engaged in the receptacle (7).

18. A pocket wagon (1) according to claim 16 or 17, **characterized in that** it is a double wagon or a train-type wagon.
